# EUROPÄISCHE PATENTSCHRIFT

(11) **EP 2 842 847 B1**
(45) Veröffentlichungstag und Bekanntmachung des Hinweises auf die Patenterteilung: **21.10.2015**
(21) Anmeldenummer: 14182301.3
(22) Anmeldetag: 26.08.2014
(51) Int. Cl.: B62H 5/14

(54) **Rahmenschloss**
Frame lock
Antivol de cadre

(30) Priorität: 27.08.2013 DE 102013217073
(43) Veröffentlichungstag der Anmeldung: 04.03.2015
(73) Patentinhaber: ABUS August Bremicker Söhne KG, 58300 Wetter-Volmarstein (DE)
(72) Erfinder:
(74) Vertreter: Manitz, Finsterwald & Partner GbR

(56) Entgegenhaltungen:
- WO-A1-99/08924
- DE-A1-102010 008 053
- DE-A1-102010 008 054

## Beschreibung

Die vorliegende Erfindung betrifft ein Rahmenschloss für ein Zweirad mit einer elektrischen Antriebseinrichtung, einem drehbar gelagerten Drehbügel, der von der Antriebseinrichtung zwischen einer Offenstellung und einer Geschlossenstellung verstellbar ist, und einem Riegelelement, das von der Antriebseinrichtung zwischen einer Verriegelungsstellung und einer Freigabestellung verstellbar ist, sowie offenbart im nächstliegenden Stand der Technick DE 10 2010 008 053 A1.

Zur Sicherung von Zweirädern gegen Diebstahl können neben separaten Schlössern, wie etwa Kabel-, Ketten- oder Bügelschlössern, insbesondere auch Rahmenschlösser verwendet werden. Diese sind in der Regel mit dem Rahmen des Zweirades verbunden und können in der genannten Geschlossenstellung zwischen Speichen oder durch sonstige Öffnungen eines Rades des Zweirades eingreifen und so eine Drehung des Rades blockieren. Im Wesentlichen können dabei zwei Arten von Rahmenschlössern unterschieden werden: Rahmenschlösser mit einem Schwenkbügel, der zwischen die Speichen eines Rades eingeschwenkt werden kann, und Rahmenschlösser mit einem Drehbügel, der im Wesentlichen kreisbogenförmig ist und entlang einer durch diesen Kreisbogen definierten Kreisbahn zwischen die Speichen des Rades eingedreht werden kann.

Derartige Rahmenschlösser können manuell betätigbar sein. Zur Erhöhung des Bedienkomforts kann die Betätigung des Rahmenschlosses allerdings auch automatisiert werden. Dazu kann insbesondere eine elektrische Antriebseinrichtung in dem Rahmenschloss vorgesehen sein, die beispielsweise von einer Batterie mit Energie versorgt wird. Insbesondere bei den zunehmend verbreiteten elektrisch angetriebenen Fahrrädern braucht diese Batterie nicht in dem Rahmenschloss integriert zu sein, sondern es kann für die Energieversorgung der Antriebseinrichtung des Rahmenschlosses auch eine Batterie des elektrischen Fahrrades genutzt werden.

Zur Erhöhung der Sicherheit des Rahmenschlosses kann zusätzlich zu dem Drehbügel ein Riegelelement vorgesehen sein, mittels dessen der Drehbügel etwa in einer bestimmten Stellung gesperrt werden kann, so dass zu einem Verstellen des Drehbügels aus dieser Stellung zunächst das Riegelelement aus der sperrenden Verriegelungsstellung in eine den Drehbügel nicht sperrende Freigabestellung verstellt werden muss. Bei einem automatisiert mittels einer elektrischen Antriebseinrichtung verstellbaren Rahmenschloss ist es dabei wünschenswert, wenn auch diese zusätzliche Sicherung mittels des Riegelelements gleichermaßen angetrieben erfolgt.

Dabei ist jedoch zu beachten, dass sich die Bewegungsabläufe des Drehbügels zwischen dessen Geschlossenstellung und Offenstellung und der Riegelelements zwischen dessen Verriegelungsstellung und Freigabestellung zwar teilweise überlagern können. Allerdings ist es zum Sperren des Drehbügels in einer von dem Drehbügel am Ende eines Bewegungsablaufs eingenommenen Stellung zweckmäßig, dass das Riegelelement erst nach diesem Ende des Bewegungsablaufs des Drehbügels in die den Drehbügel in dieser Stellung sperrende Verriegelungsstellung verstellt wird. Somit ist es wünschenswert, ein dem Verstellen des Drehbügels nachgeordnetes Verstellen des Riegelelements zu ermöglichen.

Dazu können einfach zwei unabhängige Antriebseinrichtungen in dem Rahmenschloss vorgesehen sein, deren eine den Drehbügel und deren andere das Riegelelement zu einem Verstellen antreibt. Dies bedeutet jedoch einen erhöhten konstruktiven Aufwand und einen erhöhten Materialaufwand, da zwei Antriebseinrichtungen mit zugeordneten Elementen für eine jeweilige Übertragung der Antriebsbewegung auf den Drehbügel bzw. auf das Riegelelement verbaut werden müssen, wodurch zudem die Kosten des Rahmenschlosses steigen.

Es ist daher eine Aufgabe der Erfindung, ein Rahmenschloss für ein Zweirad bereitzustellen, das komfortabel automatisiert betrieben werden kann, besonders zuverlässig ist und dennoch besonders kostengünstig ausgebildet ist.

Die Aufgabe wird gelöst durch ein Rahmenschloss mit den Merkmalen des Anspruchs 1 und insbesondere dadurch, dass die Antriebseinrichtung in einem ersten Stellbereich mit dem Drehbügel antriebswirksam gekoppelt ist und in einem zweiten Stellbereich von dem Drehbügel trieblich entkoppelt und mit dem Riegelelement antriebswirksam gekoppelt ist.

Die antriebswirksame Kopplung der Antriebseinrichtung mit dem Drehbügel und dem Riegelelement muss dabei keine unmittelbare Kopplung sein, sondern kann über eine jeweilige Übertragungseinrichtung erfolgen oder auf andere Weise mittelbar sein, solange eine Verstellbewegung der Antriebseinrichtung geeignet ist, den Drehbügel bzw. das Riegelelement zu verstellen.

Dabei dient die antriebswirksame Kopplung der Antriebseinrichtung mit dem Drehbügel insbesondere dazu, den Drehbügel zwischen seiner Offenstellung und seiner Geschlossenstellung zu verstellen. Die antriebswirksame Kopplung der Antriebseinrichtung mit dem Riegelelement dient insbesondere dazu, das Riegelelement zwischen seiner Verriegelungsstellung und seiner Freigabestellung zu verstellen.

In der Geschlossenstellung des Drehbügels ist das Rahmenschloss vorzugsweise ringförmig geschlossen, so dass der Drehbügel ein von dem Rahmenschloss umschlossenes Rad des Zweirads gegen ein Drehen sperrt. In der Offenstellung des Drehbügels kann das Rad dagegen freigegeben sein.

Die Verriegelungsstellung des Riegelelements ist insbesondere dadurch gekennzeichnet, dass in dieser Stellung das Riegelelement den Drehbügel gegen Drehen aus einer bestimmten zu sichernden Stellung sperrt, während das Riegelelement in der Freigabestellung den Drehbügel für ein Drehen freigibt. Insofern können auch mehrere Verriegelungsstellungen und/oder Freigabestellungen des Riegelelements vorgesehen sein, wobei der Drehbügel durch verschiedene Verriegelungsstellungen in verschiedenen Stellungen gesperrt werden kann.

Dabei muss in einer Verriegelungsstellung des Riegelelements der Drehbügel nicht zwangsläufig gegen jegliche Drehbewegung gesperrt sein, sondern kann einen gewissen Bewegungsspielraum beibehalten, innerhalb dessen sich der Drehbügel drehen kann, ohne dabei jedoch die zu sperrende Stellung, insbesondere hinsichtlich der Funktion dieser Stellung, vollständig zu verlassen. Zudem kann der Drehbügel durch das Riegelelement in einer Verriegelungsstellung lediglich gegen eine von mehreren möglichen Bewegungsrichtungen gesperrt sein.

Das genannte Sperren kann beispielsweise dadurch erfolgen, dass das Riegelelement den Drehbügel hintergreift oder in eine Blockierausnehmung des Drehbügels eingreift. Um zwischen den verschiedenen Stellungen verstellbar zu sein, kann das Riegelelement insbesondere schwenkbar gelagert sein.

Die Verstellbewegung der Antriebseinrichtung erfolgt innerhalb zumindest der zwei genannten Stellbereiche, die insbesondere Winkelbereiche einer Drehverstellbewegung sind, wenn es sich etwa bei der Antriebseinrichtung um eine Drehantriebseinrichtung handelt. Während die Antriebseinrichtung in dem ersten Stellbereich antriebswirksam mit dem Drehbügel gekoppelt ist, ist die Antriebseinrichtung in dem zweiten Stellbereich von dem Drehbügel trieblich entkoppelt. Eine Verstellbewegung der Antriebseinrichtung innerhalb des zweiten Stellbereichs führt also zu keinem Verstellen des Drehbügels. Dagegen ist die Antriebseinrichtung in dem zweiten Stellbereich mit dem Riegelelement antriebswirksam gekoppelt, so dass in diesem zweiten Stellbereich das Riegelelement mittels einer Verstellbewegung der Antriebseinrichtung verstellt werden kann.

Folglich kann nach einem von der Antriebseinrichtung im ersten Stellbereich angetriebenen Verstellen des Drehbügels in eine bestimmte Stellung der zweite Stellbereich dazu genutzt werden, das Riegelelement zum Sperren des Drehbügels in dieser Stellung (oder späteren Freigeben aus dieser Stellung) zu verstellen, ohne dass der Drehbügel dabei weiter verstellt würde. Die genannten Stellbereiche ermöglich folglich vorteilhafterweise ein dem Verstellen des Drehbügels wie oben beschrieben nachgeordnetes Verstellen des Riegelelements. Dabei deckt der erste Stellbereich vorzugsweise alle dem Drehbügel zugänglichen Stellungen ab, also insbesondere den gesamten Bereich von der Offenstellung in die Geschlossenstellung und zurück.

Auf diese Weise kann eine einzelne Antriebseinrichtung, beispielsweise ein einzelner Elektromotor, zum Antrieb zweier funktional separater Einrichtungen verwendet werden: Einerseits treibt die Antriebseinrichtung das Verstellen des Drehbügels zwischen seiner Offenstellung und seiner Geschlossenstellung zum Öffnen und Schließen des Rahmenschlosses an, andererseits treibt die Antriebseinrichtung das Verstellen des Riegelelements zwischen dessen Verriegelungsstellung und dessen Freigabestellung zum Sichern des Rahmenschlosses in offenem und/oder geschlossenem Zustand an.

Ohne die Unterscheidung zweier Stellbereiche, in denen die Antriebseinrichtung mit dem Drehbügel antriebswirksam gekoppelt ist bzw. von dem Drehbügel trieblich entkoppelt ist, müssten der Drehbügel und das Riegelelement für das genannte nachgeordnete Verstellen des Riegelelements auf separate Weise, insbesondere also durch zwei unabhängige Antriebseinrichtungen angetrieben werden. Die Möglichkeit, für das Öffnen und Schließen sowie für das zusätzliche Sichern des Rahmenschlosses lediglich eine einzige Antriebseinrichtung verwenden zu können, führt zu einem besonders kompakten und kostengünstigen Aufbau des Rahmenschlosses.

Dabei kann die Antriebseinrichtung auch in dem ersten Stellbereich mit dem Riegelelement antriebswirksam gekoppelt sein. In dem ersten Stellbereich können demnach das Riegelelement und der Drehbügel zugleich verstellt werden. Das Verstellen des Riegelelements und des Drehbügels erfolgt bei dieser Ausführungsform also nicht vollständig separat. Vielmehr überlagern sich in dem ersten Stellbereich das Verstellen des Riegelelements und das Verstellen des Drehbügels. Dadurch kann das Riegelelement über die beiden Stellbereiche hinweg kontinuierlich verstellt werden. Zudem kann dadurch, dass das Riegelelement in beiden genannten Stellbereichen antriebswirksam mit der Antriebseinrichtung gekoppelt ist, ein umfangreicheres Verstellen des Riegelelements erreicht werden, als wenn das Riegelelement lediglich in einem der Stellbereiche verstellt würde.

Gemäß einer bevorzugten Ausführungsform ist der Drehbügel in dem zweiten Stellbereich der Antriebseinrichtung in die Geschlossenstellung verstellt. Somit kann dem von der Antriebseinrichtung angetriebenen Erreichen dieser Geschlossenstellung ein (weiteres) Verstellen des Riegelelements nachgelagert sein, das insbesondere dazu dienen kann, den Drehbügel in dieser Geschlossenstellung zu sichern.

Vorzugsweise ist das Riegelelement dazu angepasst, in der Verriegelungsstellung den Drehbügel gegen ein Verstellen aus der Geschlossenstellung zu sperren. Alternativ oder zusätzlich kann das Riegelelement dazu angepasst sein, in der Verriegelungsstellung den Drehbügel gegen ein Verstellen aus der Offenstellung zu sperren. Dabei können diese beiden genannten Verriegelungsstellungen identisch sein. Das Riegelelement kann aber auch zwei oder mehr verschiedene Verriegelungsstellungen aufweisen, wobei das Riegelelement in einer der Verriegelungsstellungen den Drehbügel in seiner Geschlossenstellung und in einer anderen der Verriegelungsstellungen den Drehbügel in seiner Offenstellung sperrt.

Weiterhin ist es vorteilhaft, wenn die Antriebseinrichtung dazu angepasst ist, bei einem Übergang von dem ersten Stellbereich in den zweiten Stellbereich zwangsgeführt von dem Drehbügel trieblich entkoppelt zu werden. Umgekehrt kann bei einem Übergang von dem zweiten Stellbereich in den ersten Stellbereich die Antriebseinrichtung mit dem Drehbügel antriebswirksam gekoppelt werden. Das Entkoppeln erfolgt dabei vorzugsweise insofern automatisch, als das Durchlaufen des jeweiligen Übergangs zwischen den Stellbereichen direkt das Entkoppeln bzw. Koppeln bewirkt. Es muss also insbesondere keine eigene Antriebseinrichtung vorgesehen sein, durch die das Entkoppeln bzw. Koppeln eingestellt würde. So kann im Verlauf einer gesamten, vorzugsweise kontinuierlichen, Verstellbewegung der Antriebseinrichtung zunächst der eine Stellbereich und dann der andere Stellbereich durchlaufen werden, wobei im genannten Übergang zwischen den Stellbereichen eine entsprechende Entkopplung oder Kopplung der Antriebseinrichtung von bzw. mit zumindest dem Drehbügel erfolgt.

Gemäß einer Ausführungsform ist der Drehbügel über zumindest ein Koppelelement mit der Antriebseinrichtung koppelbar. Demzufolge kann die Kopplung des Drehbügels mit der Antriebseinrichtung indirekt, nämlich über das genannte zumindest eine Koppelelement erfolgen. Dabei können auch mehrere Koppelelemente, die zusammen eine Übertragungseinrichtung zwischen der Antriebseinrichtung und dem Drehbügel bilden, etwa nach Art einer Gelenkanordnung, vorgesehen sein.

Bevorzugt ist das Koppelelement dabei zwischen einer ersten Stellung, die der Offenstellung des Drehbügels entspricht und in der das Koppelelement mit der Antriebseinrichtung drehwirksam gekoppelt ist, einer zweiten Stellung, die der Geschlossenstellung des Drehbügels entspricht und in der das Koppelelement weiterhin mit der Antriebseinrichtung drehwirksam gekoppelt ist, und einer dritten Stellung, die weiterhin der Geschlossenstellung des Drehbügels entspricht und in der das Koppelelement von der Antriebseinrichtung drehentkoppelt ist, versetzbar. Der Übergang zwischen der genannten zweiten Stellung und der genannten dritten Stellung bewirkt dann ja nach Richtung das Entkoppeln bzw. Koppeln des Drehbügels von der Antriebseinrichtung. Demzufolge nimmt das Koppelelement die genannte zweite und die genannte dritte Stellung insbesondere beim Übergang zwischen dem genannten ersten Stellbereich und dem genannten zweiten Stellbereich ein, während der Bereich zwischen der genannten ersten Stellung und der genannten zweiten Stellung insbesondere im Wesentlichen dem genannten ersten Stellbereich entspricht.

Gemäß einer Weiterbildung weist das Rahmenschloss eine Umlenkeinrichtung auf, die dazu angepasst ist, das Koppelelement bei einer von der ersten Stellung ausgehenden Drehbewegung gegen eine Drehbewegung über die zweite Stellung hinaus zu sperren und ein Versetzen des Koppelelements in einer radialen Richtung zu bewirken. Unter Drehbewegung sind dabei auch Schwenkbewegungen zu verstehen. Das genannte Versetzen des Koppelhebels aus der zweiten Stellung kann den Koppelhebel dann gerade in die genannte dritte Stellung verstellen und somit das Entkoppeln des Koppelelements von der Antriebseinrichtung bewirken. Die Umlenkeinrichtung ist dabei vorzugsweise keine aktive Einrichtung, die den Koppelhebel zu dem Versetzen antreibt, sondern rein passiv, so dass das Versetzen des Koppelhebels insbesondere mittelbar durch die Antriebseinrichtung angetrieben erfolgt.

Beispielsweise kann es sich bei der Umlenkeinrichtung um einen Drehanschlag handeln, der etwa als Teil des Gehäuses des Rahmenschlosses ausgebildet sein kann. Dabei kann der Drehanschlag einen Drehbegrenzungsabschnitt, an den der Koppelhebel nach Durchlaufen des ersten Stellbereichs aus der ersten genannten Stellung in die zweite genannte Stellung anschlägt, und einen Führungsabschnitt aufweisen, entlang dessen der Koppelhebel nach dem Anschlagen an den Drehbegrenzungsabschnitt in die dritte genannte Stellung geführt und so von der Antriebseinrichtung entkoppelt wird.

Gemäß einer vorteilhaften Ausführungsform weist das Koppelelement eine Aufnahme auf, in die ein Ausgangselement der Antriebseinrichtung (z.B. Mitnehmer) eingreift, um den Drehbügel zu verstellen, wobei die Antriebseinrichtung und das Koppelelement dazu angepasst sind, dass bei einem Übergang der Antriebseinrichtung von dem ersten Stellbereich in den zweiten Stellbereich das Ausgangselement der Antriebseinrichtung aus der Aufnahme des Koppelelements austritt, um den Drehbügel von der Antriebseinrichtung zu entkoppeln. Das Ausgangselement der Antriebseinrichtung kann insbesondere mittels eines radialen Fortsatzes, der einen bezüglich der Drehachse der Antriebseinrichtung exzentrischen Nocken darstellt, in die genannte Aufnahme eingreifen. Dabei kann die Aufnahme beispielsweise in einer Achsbohrung des Koppelelements vorgesehen sein, in der das Ausgangselement der Antriebseinrichtung angeordnet ist. Die Aufnahme stellt dann etwa eine seitliche Ausnehmung in dieser Achsbohrung dar.

Das Austreten des Ausgangselements aus der Aufnahme kann vorteilhafterweise gerade dadurch erfolgen, dass der Koppelhebel in radialer Richtung aus der genannten zweiten Stellung in die genannte dritte Stellung versetzt wird. Dazu kann das Ausgangselement mit einem solchen Spiel in die Aufnahme des Koppelhebels eingreifen, dass das Koppelelement in der genannten zweiten Stellung relativ zu der Antriebseinrichtung radial versetzbar ist und in der genannten dritten Stellung relativ zu der Antriebseinrichtung drehbeweglich ist. D.h. die Antriebseinrichtung kann in der genannten dritten Stellung relativ zu dem Koppelelement durchdrehen, so dass das Koppelelement von der Verstellbewegung der Antriebseinrichtung innerhalb des zweiten Stellbereichs entkoppelt ist.

Vorzugsweise umfasst das Koppelelement einen schwenkbaren Koppelhebel, der eine variable antriebswirksame Länge aufweist. Diese Längenvariabilität wirkt sich insbesondere insofern vorteilhaft aus, als durch sie der Verstellweg des Drehbügels im Verhältnis zum Ausmaß der Verstellbewegung der Antriebseinrichtung trotz eingeschränkten Platzes im Inneren des Rahmenschlosses vergleichsweise lang sein kann. Die antriebswirksame Länge des Koppelhebels kann nämlich insbesondere gerade dort besonders lang sein, wo der im Gehäuse des Rahmenschlosses zur Verfügung stehende Platz es zulässt, und dort vergleichsweise kurz, wo der Koppelhebel beengte Bereiche des Rahmenschlosses durchläuft. Ein Koppelhebel konstanter Länge wäre dagegen durch die engen Bereiche auf eine kurze maximale Länge beschränkt, so dass der eigentlich vorhandene Platz nicht hinreichend ausgenutzt würde.

Für die Übertragung der Verstellbewegung der Antriebseinrichtung ist nicht die tatsächliche Länge, sondern die antriebswirksame Länge des Koppelhebels entscheidend, d.h. der Abstand zwischen einem Eingangspunkt einer auf den Koppelhebel übertragenen Bewegung und dem Ausgangspunkt, an dem der Koppelhebel diese Bewegung auf ein weiteres Element überträgt. Beispielsweise kann der Eingangspunkt die Drehachse des Koppelhebels sein, an der der Koppelhebel antriebswirksam mit der Antriebseinrichtung gekoppelt ist und um die der Koppelhebel schwenkbar ist. Der Ausgangspunkt kann ein Anlenkungspunkt des Koppelhebels sein, an dem der Koppelhebel mit einem weiteren Element der Übertragungseinrichtung oder direkt mit dem Drehbügel antriebswirksam gekoppelt ist. Die antriebswirksame Länge ist insofern von der tatsächlichen Form des Koppelhebels, also dessen Verlauf oder dessen Erstreckung im Raum, zu unterscheiden.

Gemäß einer vorteilhaften Ausführungsform ist der Koppelhebel zumindest zweiteilig mit einer Schieberführung und einem in der Schieberführung geführten Schieber ausgebildet. Beispielsweise können die Schieberführung und der Schieber zueinander komplementäre Profile aufweisen, so dass das Profil des Schiebers in dem Profil der Schieberführung aufgenommen und darin, insbesondere linear, versetzt werden kann. Vorzugsweise sind der Schieber und die Schieberführung derart ausgebildet, dass der Schieber in Richtung der antriebswirksamen Länge des Koppelhebels längsbeweglich in der Schieberführung geführt wird.

Insbesondere kann eine Zwangsführungseinrichtung vorgesehen sein, durch welche die antriebswirksame Länge des Koppelhebels in Abhängigkeit von der Winkelausrichtung des Koppelhebels festgelegt ist. Beispielsweise kann die Zwangsführungseinrichtung als Kulissenführung mit einem in einer Nut oder einem Langloch geführten Zapfen ausgebildet sein. Dabei kann der Zapfen etwa an dem genannten Schieber des Koppelhebels vorgesehen sein. In diesem Fall kann der Zapfen insbesondere im Wesentlichen dem genannten Anlenkungspunkt des Koppelhebels entsprechen, so dass der Verlauf der Nut oder des Langlochs den Verlauf des Anlenkungspunkts bei einer Verstellbewegung der Antriebseinrichtung vorgibt. Wenn der Zapfen an dem Koppelhebel angeordnet ist, kann die Nut oder das Langloch in dem Gehäuse des Rahmenschlosses vorgesehen sein. Umgekehrt können aber auch der Zapfen an dem Gehäuse angeordnet und die Nut oder das Langloch an dem Koppelhebel vorgesehen sein. Eines der Elemente, Zapfen bzw. Nut oder Langloch, ist jedenfalls vorzugsweise gehäusefest ausgebildet.

Bei einer weiteren vorteilhaften Ausführungsform weist die Antriebseinrichtung ein Exzenterelement auf, das in einer Nut oder in einem Langloch des Riegelelements geführt ist, um die Antriebseinrichtung mit dem Riegelelement antriebswirksam zu koppeln. Das Exzenterelement, das vorzugsweise als Zapfen ausgebildet ist, kann dann bezüglich einer Drehachse der Antriebseinrichtung auf einer Kreisbahn bewegt werde. Mittels der Nut oder dem Langloch des Riegelelements kann dieser Bewegungsverlauf dann zu einem Verstellen des Riegelelements abgeleitet werden. Dabei kann der Verlauf der Nut oder des Langlochs, der beispielsweise eine Kurvenbahn ist, vorgeben, in welcher Art das Riegelelement verstellt wird. Durch das Zusammenwirken des Exzenterelements mit der Nut oder dem Langloch des Riegelelements ist die Antriebseinrichtung auf einfache und insbesondere direkte Weise mit dem Riegelelement gekoppelt.

Insbesondere kann das Riegelelement an einem Gehäuseabschnitt des Rahmenschlosses schwenkbar angelenkt sein. Das Riegelelement kann dann beispielsweise durch das genannte Zusammenwirken des Exzenterelements mit der Nut oder dem Langloch des Riegelelements um eine Schwenkachse geschwenkt werden. Auf diese Weise kann das Riegelelement je nach Verstellbewegung der Antriebseinrichtung zwischen einer Verriegelungsstellung und einer Freigabestellung angetrieben verstellt werden.

Weiterhin ist es vorteilhaft, wenn die Antriebseinrichtung durch eine Drehantriebseinrichtung gebildet ist, die dazu angepasst ist, für ein Verstellen des Drehbügels zwischen der Offenstellung und der Geschlossenstellung eine Drehbewegung von höchstens 360°, insbesondere weniger als etwa 180°, durchzuführen. Bei einer derartigen Ausführungsform kann der erste Stellbereich demnach auf einen Winkelbereich von unter 360°, insbesondere lediglich etwa 180°, begrenzt sein. Eine Drehbewegung über dieses Maß hinaus kann dann als zweiter Stellbereich der Antriebseinrichtung dem dem Verstellen des Drehbügels nachgeordneten Verstellen des Riegelelements dienen. Dabei kann der zweite Stellbereich seinerseits auf einen Winkelbereich von unter 180° beschränkt sein und insbesondere lediglich etwa 90° betragen.

Bevorzugt weist die Antriebseinrichtung einen einzigen elektrischen Motor auf. Ein einziger elektrischer Motor reicht für das Verstellen des Rahmenschlosses mittels der Antriebseinrichtung insbesondere deshalb aus, weil das Verstellen des Drehbügels und des Riegelelements aufgrund des Vorsehens der genannten zwei Stellbereiche zumindest teilweise voneinander entkoppelt erfolgen kann und auf diese Weise auch das dem Verstellen des Drehbügels nachgeordnete Verstellen des Riegelelements zur Sicherung des Drehbügels erzielt werden kann. Es werden also insbesondere nicht mehrere separate Motoren für den Drehbügel bzw. das Riegelelement benötigt. Somit kann das Rahmenschloss trotz des komfortablen angetriebenen Verstellens und der besonderen Sicherung des Drehbügels durch das Riegelelement vergleichsweise kostengünstig und kompakt ausgebildet sein.

Generell ist es bevorzugt, wenn der Drehbügel von der Antriebseinrichtung über eine Übertragungseinrichtung zwischen der Offenstellung und der Geschlossenstellung verstellbar ist, wobei die Antriebseinrichtung einen Elektromotor umfasst, der ein zu einer Drehverstellbewegung antreibbares Ausgangselement aufweist, und wobei die Übertragungseinrichtung dazu angepasst ist, eine Drehverstellbewegung des Ausgangselements, die höchstens eine Umdrehung beträgt, in eine vollständige Verstellbewegung des Drehbügels zwischen der Offenstellung und der Geschlossenstellung zu übertragen (d.h. umzuwandeln). Mit anderen Worten vollzieht bei einer derartigen Ausführungsform das Ausgangselement des Elektromotors (z.B. ein Mitnehmer) während eines jeweiligen Verstellbetriebs maximal eine Umdrehung um seine Drehachse, beispielsweise lediglich eine halbe Umdrehung, eine Dreiviertelumdrehung oder eine Umdrehung von nahezu 360°. Eine Übertragungseinrichtung des Rahmenschlosses (insbesondere die bereits erläuterte Übertragungseinrichtung) ist dazu angepasst, aufgrund einer jeweiligen Drehverstellbewegung des Ausgangselements, die höchstens eine Umdrehung beträgt, den Drehbügel gleichwohl vollständig zwischen der Offenstellung und der Geschlossenstellung hin- und herzubewegen.

Alternativ oder zusätzlich kann vorgesehen sein, dass die Antriebseinrichtung einen gekapselten Elektromotor umfasst, der ein zu einer Drehverstellbewegung antreibbares Ausgangselement aufweist, ohne dass bezogen auf den Drehmomentübertragungspfad dem Ausgangselement des Elektromotors ein Zahnradgetriebe nachgelagert ist.

Derartige Ausführungsformen sind besonders vorteilhaft, da insbesondere ein gekapselter (d.h. abgedichteter) Elektromotor ohne frei liegendes Zahnradgetriebe verwendet werden kann, also ohne ein Zahnradgetriebe, welches entlang des Drehmomentübertragungspfades dem Ausgangselement des Elektromotors (z.B. Mitnehmer) nachgelagert und insbesondere zwischen dem Ausgangselement des Elektromotors und dem Drehbügel angeordnet ist. Ein derartiges Zahnradgetriebe, beispielsweise ein Schneckengetriebe, ein Stirnradgetriebe oder auch ein mit dem Drehbügel vereinigtes Zahnstangengetriebe, kann nämlich unerwünscht störanfällig gegenüber Verschmutzungen sein, die in den Innenraum des Gehäuses des Rahmenschlosses gelangen können. Zwar kann in den Elektromotor ein Zahnradgetriebe integriert sein (als sogenannter Getriebemotor). Allerdings ist dies unproblematisch, solange der Elektromotor einschließlich des integrierten Getriebes hinreichend abgedichtet ist. Die Übertragung der Drehverstellbewegung des Ausgangselements auf den Drehbügel wird vorzugsweise mittels der genannten Übertragungseinrichtung bewirkt. Die Übertragungseinrichtung des Rahmenschlosses kann deutlich weniger störanfällig gegenüber Verschmutzungen ausgebildet sein als ein Zahnradgetriebe. Die genannte Übertragungseinrichtung kann insbesondere wenigstens einen Koppelhebel und/oder Verbindungshebel umfassen (jedoch kein Zahnradgetriebe), und die Übertragungseinrichtung kann insbesondere eine Gelenkeinrichtung bilden.

Insofern bezieht sich die vorliegende Erfindung auch unabhängig von der Verwendung des erläuterten Riegelelements und der erläuterten Kopplung und Entkopplung der Antriebseinrichtung mit dem Drehbügel oder von dem Drehbügel ferner auf ein Rahmenschloss für ein Zweirad, mit einer elektrischen Antriebseinrichtung, einer Übertragungseinrichtung und einem drehbar gelagerten Drehbügel, der von der Antriebseinrichtung über die Übertragungseinrichtung zwischen einer Offenstellung und einer Geschlossenstellung verstellbar ist, wobei die elektrische Antriebseinrichtung einen Elektromotor umfasst, der ein zu einer Drehverstellbewegung antreibbares Ausgangselement aufweist, und wobei die Übertragungseinrichtung dazu angepasst ist, eine Drehverstellbewegung des Ausgangselements, die höchstens eine Umdrehung beträgt, in eine vollständige Verstellbewegung des Drehbügels zwischen der Offenstellung und der Geschlossenstellung zu übertragen.

Ferner bezieht sich die vorliegende Erfindung unabhängig von der Verwendung des erläuterten Riegelelements und der erläuterten Kopplung und Entkopplung der Antriebseinrichtung mit dem Drehbügel oder von dem Drehbügel auch auf ein Rahmenschloss für ein Zweirad, mit einer elektrischen Antriebseinrichtung und einem drehbar gelagerten Drehbügel, der von der Antriebseinrichtung (vorzugsweise über eine Übertragungseinrichtung) zwischen einer Offenstellung und einer Geschlossenstellung verstellbar ist, wobei die Antriebseinrichtung einen gekapselten Elektromotor umfasst, der ein zu einer Drehverstellbewegung antreibbares Ausgangselement aufweist, ohne dass bezogen auf den Drehmomentübertragungspfad dem Ausgangselement des Elektromotors ein Zahnradgetriebe nachgelagert ist (d.h. ohne dass nach dem Ausgangselement des Elektromotors ein Zahnradgetriebe vorgesehen ist).

Gemäß einer weiteren vorteilhaften Ausführungsform weist das Rahmenschloss eine Klobenaufnahme für einen Kloben eines Sicherungsseils sowie einen Drehriegel auf, der zwischen einer Verriegelungsstellung, in der ein in die Klobenaufnahme eingeführter Kloben gegen ein Entnehmen gesperrt ist, und einer Freigabestellung schwenkbar ist, in der ein in die Klobenaufnahme eingeführter Kloben für ein Entnehmen freigegeben ist. Dabei ist insbesondere die elektrische Antriebseinrichtung des Rahmenschlosses oder ein hiermit antriebswirksam gekoppeltes Element dazu angepasst, den Drehriegel zu einer Schwenkbewegung in die Freigabestellung anzutreiben, wenn der Drehbügel aus der Geschlossenstellung in die Offenstellung verstellt wird. Bei dem Sicherungsseil kann es sich beispielsweise um ein Drahtseil oder eine Kette handeln.

Die Antriebseinrichtung kann auch umgekehrt dazu angepasst sein, den Drehriegel zumindest mittelbar aus der Freigabestellung zu einer Schwenkbewegung in die Verriegelungsstellung anzutreiben. Vorzugsweise ist der Drehriegel aber in die Verriegelungsstellung vorgespannt, so dass ein angetriebenes Verstellen des Drehriegels in die Verriegelungsstellung nicht erforderlich ist.

Obwohl in der Verriegelungsstellung des Drehriegels ein in die Klobenauf nahme eingeführter Kloben nicht aus der Klobenaufnahme entnommen werden kann, kann vorgesehen sein, dass auch in der Verriegelungsstellung des Drehriegels ein Kloben in die Klobenaufnahme eingeführt werden kann. Der Kloben ist also in der Verriegelungsstellung des Drehriegels insbesondere einrastend in die Klobenaufnahme einführbar. Dadurch kann auch bei geschlossenem Rahmenschloss, wenn der Drehriegel aufgrund der Vorspannung oder eines Verstellens in die Verriegelungsstellung geschwenkt ist, der Kloben mit dem Rahmenschloss verbunden werden und dann gegen ein Entnehmen gesichert sein, bis das Rahmenschloss geöffnet und dabei auch der Drehriegel zu einer Schwenkbewegung in die Freigabestellung angetrieben wird.

Die Erfindung wird nachfolgend lediglich beispielhaft unter Bezugnahme auf die Figuren beschrieben.
- Fig. 1A bis 1B: zeigen eine Ausführungsform des Rahmenschlosses in einer Frontalansicht in einem Zustand, in dem sich der Drehbügel in der Offenstellung befindet.
- Fig. 2A und 2B: zeigen den Fig. 1A und 1B entsprechende Darstellungen derselben Ausführungsform des Rahmenschlosses in einem Zustand, in dem sich der Drehbügel in der Geschlossenstellung befindet.
- Fig. 3A und 3B: zeigen den Fig. 1A und 1B bzw. 2A und 2B entsprechende Darstellungen derselben Ausführungsform des Rahmenschlosses in einem weiteren Zustand, in dem sich der Drehbügel in der Geschlossenstellung befindet und sich ein Riegelelement in einer Verriegelungsstellung befindet.

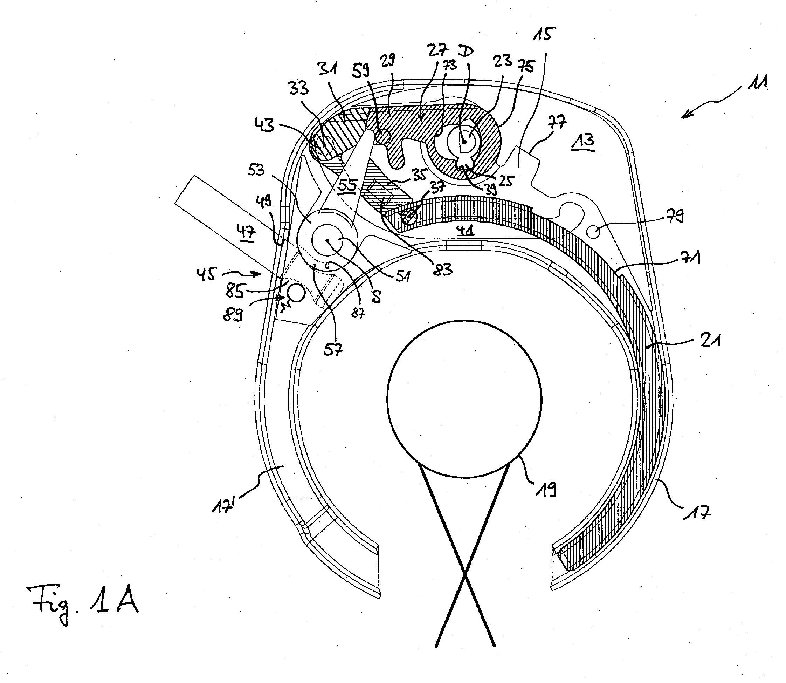

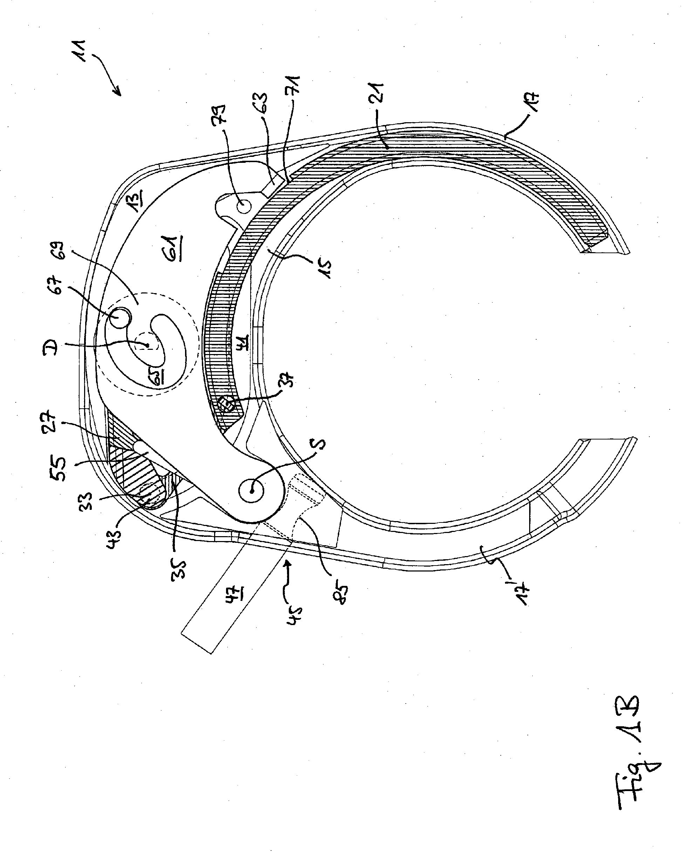

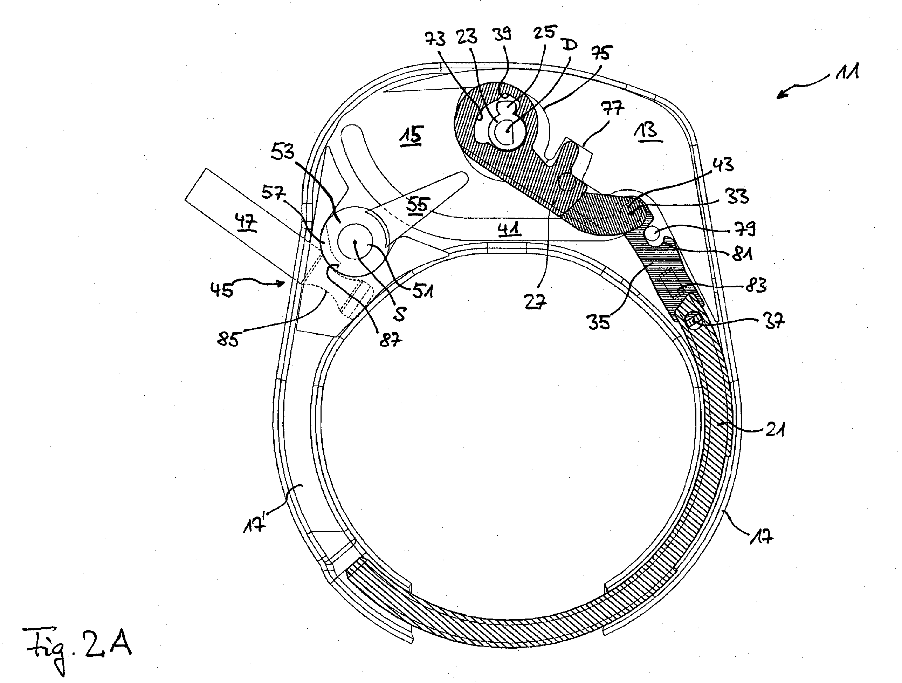

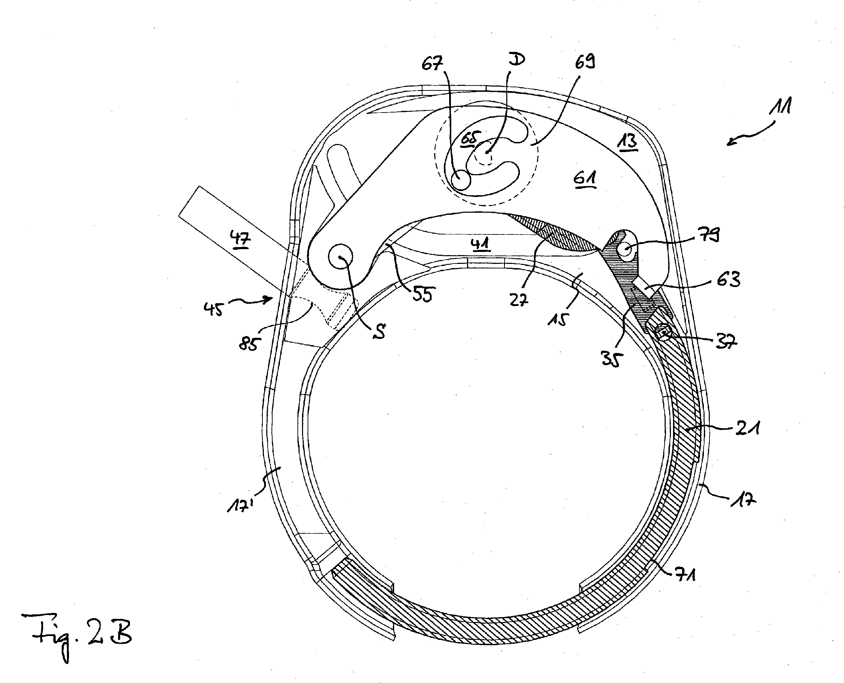

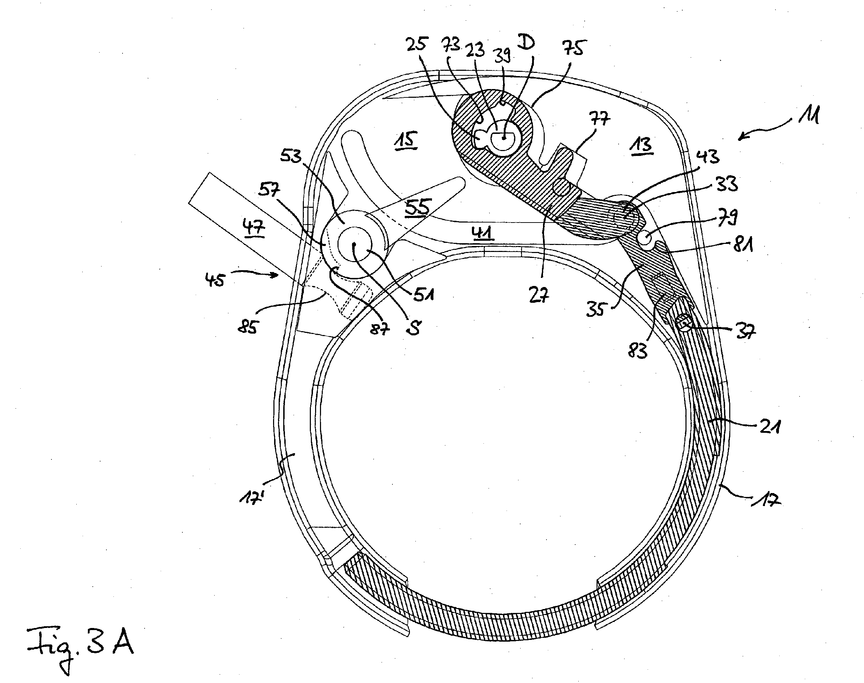

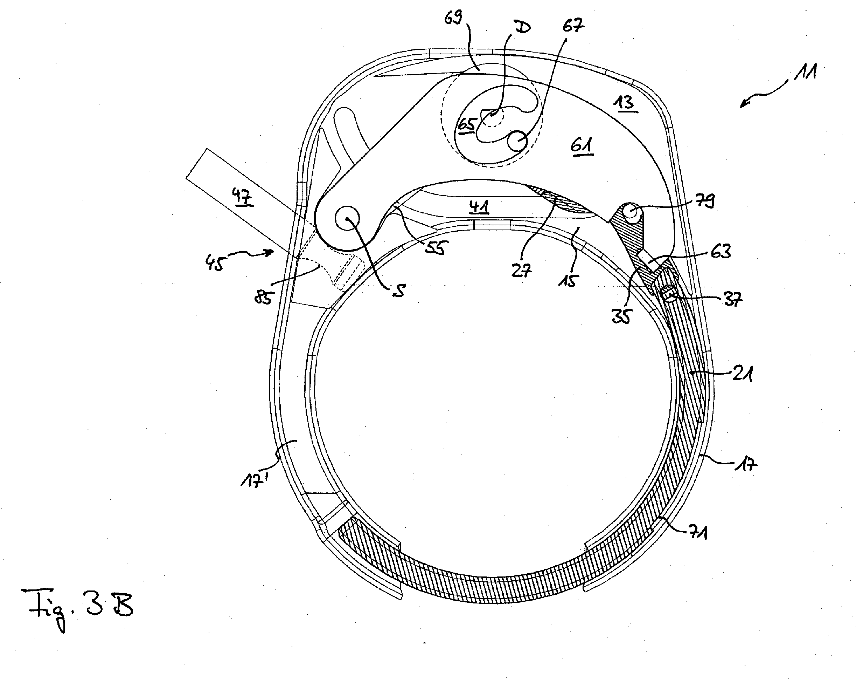

In den Fig. 1A und 1B bis 3A und 3B ist jeweils dieselbe Ausführungsform eines Rahmenschlosses 11 dargestellt. Dabei ist jeweils von einem Gehäuse 13 des Rahmenschlosses 11 nur eine Rückseite dargestellt, damit die in dem Rahmenschloss 11 befindlichen Einzelteile erkennbar sind. Insgesamt werden drei Zustände des Rahmenschlosses 11 dargestellt, wobei die Fig. 1A und 1B übereinstimmend einen ersten Zustand, die Fig. 2A und 2B übereinstimmend einen zweiten Zustand und die Fig. 3A und 3B übereinstimmend einen dritten Zustand des Rahmenschlosses 11 zeigen. Von den Fig. 1A, 2A und 3A unterscheiden sich die Fig. 1B, 2B und 3B jeweils durch die Zahl der dargestellten Elemente des Rahmenschlosses 11. Im Folgenden wird die Fig. 1A ausführlich erläutert. Die übrigen Figuren werden dann insbesondere anhand ihrer Unterschiede zu der Fig. 1A beschrieben.

Das Gehäuse 13 des Rahmenschlosses 11 ist im Wesentlichen torusförmig und hohl ausgebildet, wobei der Torus an einer Seite (in Fig. 1A unten) durchbrochen ist. An der dieser Durchbrechung entgegengesetzten Seite (in Fig. 1A oben) ist die Torusform zu einem Aufnahmeraum 15 erweitert, der verschiedene Elemente des Rahmenschlosses 11 beherbergt. Stark vereinfacht kann das Gehäuse 13 des Rahmenschlosses 11 auch als im Wesentlichen quaderförmiger Aufnahmeraum 15 aufgefasst werden, wobei von zwei Ecken einer Längsseite des Rahmenschlosses 11 bogenförmige Schenkel 17, 17' zur umgreifenden Aufnahme eines Rades 19 (vgl. Fig. 1A) eines Zweirades (nicht gezeigt) ausgehen.

In einem der beiden Schenkel 17 des Gehäuses 13 ist ein kreisbogenförmiger Drehbügel 21 geführt, wobei die Drehbeweglichkeit des Drehbügels 21 auf ein Drehen des Drehbügels entlang einer Kreisbahn eingeschränkt ist, die durch die Kreisbogenform des Drehbügels 21 bzw. die dazu entsprechende Form des Schenkels 17 definiert ist.

In dem in Fig. 1A gezeigten Zustand des Rahmenschlosses 11 befindet sich der Drehbügel 21 in seiner Offenstellung, in der das Rad 19 durch den Drehbügel 21 nicht gesperrt wird. In dieser Offenstellung befindet sich der Drehbügel 21 vollständig innerhalb des Gehäuses 13 des Rahmenschlosses 11. Der Drehbügel 21 beschreibt nahezu einen Halbkreis. Dagegen stellt der den Drehbügel 21 aufnehmende Schenkel 17 lediglich etwa einen Viertelkreis dar. Daher ragt der Drehbügel 21 in der Offenstellung weit in den Aufnahmeraum 15 des Gehäuses 13 hinein.

Der Drehbügel 21 ist aus der gezeigten Offenstellung um etwa 90° um seinen Mittelpunkt in eine in den Fig. 2A bis 3B gezeigte Geschlossenstellung drehbar. In dieser Geschlossenstellung ragt der Drehbügel 21 aus dem ihn führenden Schenkel 17 somit um etwa einen Viertelkreis herausragt und dringt teilweise in den gegenüberliegenden Schenkel 17' ein, so dass das Rahmenschloss 11 ringförmig verschlossen wird.

Um das Rahmenschloss 11 öffnen und schließen zu können, also den Drehbügel 21 aus der gezeigten Offenstellung in die genannte Geschlossenstellung und zurück verstellen zu können, weist das Rahmenschloss 11 in dem Aufnahmeraum 15 des Gehäuses 13 eine elektrische Antriebseinrichtung 23 in Form eines Elektromotors auf, wobei stellvertretend für die gesamte Antriebseinrichtung in den Figuren lediglich das Ausgangselement in Form eines Mitnehmers 23 gezeigt ist. Der Mitnehmer 23 ist im Wesentlichen zylindersegmentförmig ausgebildet und weist einen radial abstehenden Fortsatz 25 auf, über den der Mitnehmer 23 mit einem Koppelhebel 27 antriebswirksam koppelbar ist.

Der Koppelhebel 27 ist zweiteilig ausgebildet und umfasst eine Schieberführung 29 sowie einen in dieser Schieberführung 29 geführten Schieber 31. Dabei weisen die Schieberführung 29 und der Schieber 31 zueinander komplementäre Profile auf, durch die der Schieber 31 mit der Schieberführung 29 gekoppelt und in der Schieberführung 29 linear gleitend versetzbar ist. Der Koppelhebel 27 erstreckt sich im Wesentlichen radial von einer Drehachse D weg, um die der Mitnehmer 23 der elektrischen Antriebseinrichtung eine antreibende Verstellbewegung ausführen kann.

An einem Anlenkungspunkt 33 des Schiebers 31 des Koppelhebels 27 ist ein Verbindungshebel 35 gelenkig mit dem Koppelhebel 27 gekoppelt. Der Verbindungshebel 35 weist einen weiteren Anlenkungspunkt 37 auf, über den der Verbindungshebel 35 mit dem Drehbügel 21 gekoppelt ist. Somit bilden der mittels der Antriebseinrichtung 23 schwenkbare Koppelhebel 27 und der den Koppelhebel 27 mit dem Drehbügel 21 verbindende Verbindungshebel 35 eine Übertragungseinrichtung zur Übertragung einer Verstellbewegung der Antriebseinrichtung 23 auf den Drehbügel 21.

Insbesondere stellt der Koppelhebel 27 ein Koppelelement dar, über das der Drehbügel 21 antriebswirksam mit der Antriebseinrichtung 23 koppelbar ist. Dabei ist der Koppelhebel 27 in der in Fig. 1A gezeigten Stellung des Koppelhebels 27 drehwirksam mit dem Mitnehmer 23 der elektrischen Antriebseinrichtung gekoppelt. Diese Kopplung erfolgt dadurch, dass der Fortsatz 25 in eine Aufnahme 39 des Koppelhebels 27 eingreift, so dass eine Verstellbewegung des Mitnehmers 23 um die Drehachse D zu einem Verschwenken des Koppelhebels 27 um dieselbe Drehachse D führt.

Durch den Koppelhebel 27 wird die Drehbewegung des Mitnehmers 23 zu einer Bewegung des Anlenkungspunkts 33 entlang einer Bewegungsbahn abgeleitet. Diese Bewegungsbahn des Anlenkungspunkts 33 wird dabei durch die antriebswirksame Länge des Koppelhebels 27 bestimmt, die ihrerseits durch den Abstand des Anlenkungspunkts 33 zur Drehachse D definiert ist. Da der Koppelhebel 27 als Schieberführung 29 und darin geführter Schieber 31 ausgebildet ist, ist die genannte antriebswirksame Länge des Koppelhebels 27 variabel, so dass die Bewegung des Anlenkungspunkts 33 nicht auf eine Kreisbahn um die Drehachse D eingeschränkt ist. Vielmehr ändert sich die antriebswirksame Länge des Koppelhebels 27 in Abhängigkeit von der Winkelausrichtung des Koppelhebels 27 relativ zum Gehäuse 13 des Rahmenschlosses 11.

Die winkelabhängige Änderung der antriebswirksamen Länge des Koppelhebels 27 wird durch eine Zwangsführung in Form einer Kulissenführung mit einem in einer Nut 41 geführten Zapfen 43 bewirkt. Dabei befindet sich der Zapfen 43 an dem Anlenkungspunkt 33 des Koppelhebels 27, während die Nut 41 in dem Gehäuse 13 ausgebildet ist. Vorteilhafterweise dient der Zapfen 43 nicht nur der Zwangsführung in der Nut 41, sondern zugleich der Kopplung des Koppelhebels 27 mit dem Verbindungshebel 35.

Durch den Verlauf der Nut 41 ist die antriebswirksame Länge des Koppelhebels 27 für jede vom Koppelhebel 27 einnehmbare Winkelausrichtung festgelegt. Lediglich an dem in Fig. 1A rechts dargestellten Ende der Nut 41 wird durch eine Verbreiterung der Nut 41 ein gewisses Spiel der antriebswirksamen Länge zugelassen. Dies ist im Zusammenhang mit einer Sicherung des Drehbügels 21 in seiner Geschlossenstellung mittels eines Totpunkts der Anordnung aus Koppelhebel 27 und Verbindungshebel 35 nützlich, wie im Folgenden noch beschrieben wird.

Bei der gezeigten Ausführungsform ist der Verlauf der Nut 41 derart, dass die antriebswirksame Länge des Koppelhebels 27 ausgehend von der gezeigten Stellung zunächst abnimmt, bis der Koppelhebel 27 um etwa 90° (nach unten) geschwenkt ist, und nimmt dann so weit wieder zu, dass etwa die ursprüngliche antriebswirksame Länge wieder erreicht wird, wenn die Nut 41 vollständig durchlaufen wurde. Auf diese Weise kann trotz des begrenzten Platzes im Aufnahmeraum 15 des Rahmenschlosses 11 und trotz einer Drehung des Koppelhebels 27 von weniger als 180°, nämlich von lediglich etwa 150°, eine besonders lange Bewegungsbahn des Anlenkungspunktes 33 des Koppelhebels 27 erreicht werden.

Über den Verbindungshebel 35 wird dieser lange Bewegungsverlauf des Anlenkungspunktes 33 auf den Drehbügel 21 übertragen, so dass der Drehbügel 21 um eine Strecke gedreht werden kann, die im Wesentlichen der Länge der Bewegungsbahn des Anlenkungspunktes 33, also der Länge der Nut 41, entspricht. Die so erzielte Länge reicht aus, um den Drehbügel 21 aus der Offenstellung in die Geschlossenstellung (oder zurück) zu verstellen. Durch die variable antriebswirksame Länge des Koppelhebels 27 kann somit unter Nutzung des vorhandenen Platzes eine Drehverstellbewegung der Antriebseinrichtung 23 von weniger als einer halben Umdrehung zu einer ausreichend langen Drehverstellbewegung Bewegung des Drehbügels 21 entlang der durch seine Form definierten Kreisbahn abgeleitet werden.

Vorteilhafterweise ist zwischen dem Ausgangselement der elektrischen Antriebseinrichtung (Mitnehmer 23) und dem Drehbügel 21 kein freiliegendes Zahnradgetriebe vorgesehen. Ein solches Zahnradgetriebe wäre deutlich stärker störanfällig aufgrund von Verschmutzungen als die erläuterte Übertragungseinrichtung (Koppelhebel 27 und Verbindungshebel 35).

In einem Eckbereich des Aufnahmeraums 15, in den der den Drehbügel 21 nicht führende Schenkel 17' mündet, ist eine Klobenaufnahme 45 für einen Kloben 47 eines nicht gezeigten Sicherungsseils dargestellt. Die Klobenaufnahme 45 umfasst im Wesentlichen eine Öffnung 49 im Gehäuse 13 sowie einen nicht dargestellten Kanal, in dem der Kloben 47 zumindest teilweise eingeführt werden kann. Der Teil des Klobens 47, der sich in dem genannten Kanal der Klobenaufnahme 45 befindet, ist in Fig. 1A gestrichelt dargestellt.

Teilweise in diesen Kanal eingreifend ist ein Drehriegel 51 im Inneren des Gehäuses 13 angeordnet. Der Drehriegel 51 ist dabei im Wesentlichen als zylinderförmiger Riegelblock 53 mit einem radial abstehenden Hebelarm 55 ausgebildet.

In einem der Klobenaufnahme 45 zugewandten Abschnitt einer Mantelfläche des Riegelblocks 53 ist eine gestrichelt dargestellte Ausnehmung 57 vorgesehen, welche die Form einer tangential ausgerichteten Mulde mit einem Drehanschlag besitzt. Fig. 1A zeigt die Freigabestellung des Drehriegels 51, in der die Ausnehmung 57 derart angeordnet ist, dass der Kloben 47 den Drehriegel 51 durch die Ausnehmung 57 hindurch passieren kann und folglich ungehindert aus der Klobenaufnahme 45 heraus oder in die Klobenaufnahme 45 hinein geführt werden kann.

Der Drehriegel 51 ist um eine Schwenkachse S zwischen dieser Freigabestellung und einer Verriegelungsstellung (vgl. Fig. 2A und 3A) schwenkbar, wobei der Drehriegel 51 mittels einer nicht gezeigten Vorspanneinrichtung in Form einer Feder in die Verriegelungsstellung vorgespannt ist. Entgegen dieser Vorspannung wird der Drehriegel 51 in Fig. 1A dadurch in der Freigabestellung gehalten, dass ein an dem Koppelhebel 27 vorgesehener Zapfen 59 mit dem Hebelarm 55 zusammenwirkt und den Hebelarm 55 an einem Schwenken in die Verriegelungsstellung hindert. Das Freigeben des Klobens 47 wird also durch den Koppelhebel 27 bewirkt und erfolgt somit letztlich angetrieben durch die Antriebseinrichtung 23.

Auf diese Weise kann mittels der Antriebseinrichtung 23 in der in Fig. 1A gezeigten Stellung zugleich einerseits der Drehbügel 21 in der Offenstellung gehalten werden und andererseits der Drehriegel 51 in der gezeigten Freigabestellung gehalten werden. Zum Öffnen des Rahmenschlosses 11 kann sich also der Mitnehmer der elektrischen Antriebseinrichtung 23 in die in Fig. 1A dargestellten Stellung drehen und dadurch das Rad 19 und den Kloben 47 freigeben.

Des Weiteren weist das Rahmenschloss 11 ein Riegelelement in Form einer Riegelplatte 61 auf, die in den Fig. 1B, 2B und 3B gezeigt ist. Die Riegelplatte 61 überdeckt weite Teile des Aufnahmeraums 15 und dient somit neben der im Folgenden beschriebenen Funktion auch als Schutz der dahinter angeordneten Bestandteile des Rahmenschlosses 11 vor Zugriff von außen.

Die Riegelplatte 61 ist schwenkbar um die Schwenkachse S des Drehriegels 51 gelagert und im Wesentlichen flächig ausgebildet. In einem von der Schwenkachse S beabstandeten Endbereich weist die Riegelplatte 61 einen abgewinkelten Blockierfortsatz 63 auf, der sich in die Darstellungsebene hinein erstreckt. Zudem ist in der Riegelplatte 61 ein ungefähr C-förmiges Langloch 65 vorgesehen, dessen Verlauf etwa drei Viertel eines Ovals beschreibt.

In das Langloch 65 greift ein Zapfen 67 ein, der in dem Langloch 65 geführt wird. Der Zapfen 67 befindet sich auf einer Mitnehmerscheibe 69, die Teil des bereits in Fig. 1A gezeigten Mitnehmers 23 ist, in Fig. 1A jedoch nicht dargestellt wurde. Die Mitnehmerscheibe 69 ist größtenteils von der Riegelplatte 61 überdeckt und daher gestrichelt gezeichnet.

Bei einer Verstellbewegung der Antriebseinrichtung 23 dreht sich die Mitnehmerscheibe 69 wie auch der Fortsatz 25 (vgl. Fig. 1A) um die Drehachse D. Dabei vollzieht der Zapfen 67 aufgrund seiner exzentrischen Anordnung auf der Mitnehmerscheibe 69 eine Kreisbahn um die Drehachse D. Aufgrund des Zusammenwirkens des Zapfens 67 mit dem Langloch 65 führt eine Drehung der Mitnehmerscheibe 69 somit zu einem Schwenken der Riegelplatte 61 um die Schwenkachse S. Der Verlauf des Langlochs 65 bewirkt dabei, dass ausgehend von der in Fig. 1B gezeigten Stellung die Riegelplatte 61 zunächst von dem Drehbügel 21 weg bewegt wird und in ihrem weiteren Verlauf entlang des Langlochs 65 wieder zum Drehbügel 21 hin geschwenkt wird.

In der in Fig. 1B gezeigten Stellung der Riegelplatte 61 greift deren Blockierfortsatz 63 in eine Blockierausnehmung 71 des Drehbügels 21 ein. Insofern stellt die in Fig. 1B gezeigte Stellung der Riegelplatte 61 eine Verriegelungsstellung der Riegelplatte 61 dar. In dieser Verriegelungsstellung ist der Drehbügel 21 nämlich gegen ein Verstellen aus seiner Offenstellung in die Geschlossenstellung gesperrt.

In der in den Fig. 1A und 1B gezeigten Stellung des Rahmenschlosses 11 ist die elektrische Antriebseinrichtung 23 einerseits über den in die Aufnahme 39 eingreifenden Fortsatz 25 und andererseits über den in das Langloch 65 eingreifenden Zapfen 67 zugleich sowohl mit dem Drehbügel 21 als auch mit der Riegelplatte 61 antriebswirksam gekoppelt. Eine Verstellbewegung der Antriebseinrichtung 23 um die Drehachse D im Gegenuhrzeigersinn (bezogen auf die in den Figuren dargestellte Blickrichtung) führt aufgrund dieser antriebswirksamen Kopplungen einerseits zu einem Verschwenken des Koppelhebels 27 und - hierauf zeitlich abgestimmt - andererseits zu einem Verschwenken der Riegelplatte 61, bis der in den Fig. 2A und 2B dargestellte Zustand des Rahmenschlosses 11 erreicht ist.

Der Übergang von dem in den Fig. 1A und 1B gezeigten Zustand zu dem in den Fig. 2A und 2B gezeigten Zustand entspricht dabei einem ersten Stellbereich der Antriebseinrichtung 23. Beim Durchlaufen dieses ersten Stellbereichs ändern sich die Stellung des Koppelhebels 27, die Stellung des Drehbügels 21, die Stellung des Drehriegels 51 und die Stellung der Riegelplatte 61 ausgehend von dem in den Fig. 1A und 1B gezeigten Zustand, wie folgt.

Der Koppelhebel 27 wird um etwa 150° verschwenkt, wobei der Zapfen 43 die Nut 41 durchläuft und dabei die antriebswirksame Länge des Koppelhebels 27 winkelabhängig festlegt. Mittels des Verbindungshebels 35 wird diese Bewegung auf den Drehbügel 21 übertragen, der sich entlang der durch seine Form definierten Kreisbahn um etwa eine Vierteldrehung in seine Geschlossenstellung dreht. Am Ende dieser Stellbewegung durchläuft die Anordnung aus Koppelhebel 27 und Verbindungshebel 35 einen Totpunkt (wie nachstehend noch erläutert wird), wodurch der Drehbügel 21 in seiner Geschlossenstellung nach Erreichen einer maximalen Winkelausrichtung geringfügig zurückgezogen wird.

Infolge des Verschwenkens des Koppelhebels 27 wird zudem auch der Hebelarm 55 des Drehriegels 51 nicht länger durch den Zapfen 59 in der Freigabestellung gehalten, so dass der Drehriegel 51 aufgrund der Vorspannung um die Schwenkachse S in seine Verriegelungsstellung schwenkt. Zugleich wird die Riegelplatte 61 aufgrund der Führung des Zapfens 67 in dem Langloch 65 aus der genannten Verriegelungsstellung (Fig. 1B) geschwenkt.

Das Verschwenken der Riegelplatte erfolgt derart, dass sich der Blockierfortsatz 63 radial bezogen auf die Kreisbogenform des Drehbügels 21 von dem Drehbügel 21 wegbewegt und somit aus der Blockierausnehmung 71 heraustritt. Dadurch wird der Drehbügel 21 für das gleichzeitig stattfindende Verstellen aus der Offenstellung in die Geschlossenstellung freigegeben. Folglich nimmt die Riegelplatte 61 mit Heraustreten des Blockierfortsatzes 63 aus der Blockierausnehmung 71 im Verlauf des ersten Stellbereichs eine Freigabestellung ein.

Allerdings ist das Langloch 65 derart ausgebildet, dass sich beim Durchlaufen des ersten Stellbereichs für die Riegelplatte 61 ein Umkehrpunkt der Bewegung ergibt, so dass sich der Blockierfortsatz 63 kurz vor Erreichen der in Fig. 2B gezeigten Stellung wieder relativ zum Drehbügel 21 radial auf den Drehbügel 21 zu bewegt. Wie in Bezug auf Fig. 3B noch beschrieben wird, wird diese radiale Bewegung des Blockierfortsatzes 63 noch fortgesetzt, wenn der Zapfen 67 das Langloch 65 noch weiter bis zu dessen Ende durchläuft, so dass letztlich die Riegelplatte 61 erneut eine von der zuvor beschriebenen Verriegelungsstellung verschiedene weitere Verriegelungsstellung einnimmt, in der der Drehbügel 21 gegen ein Verstellen aus der Geschlossenstellung gesperrt ist.

Der in den Fig. 2A und 2B gezeigte Zustand stellt einen Übergangszustand im Bewegungsverlauf von dem in den Fig. 1A und 1B gezeigten Zustand zu dem in den Fig. 3A und 3B gezeigten Zustand (oder umgekehrt) dar. Denn in diesem in den Fig. 2A und 2B gezeigten Zustand wird die Antriebseinrichtung 23 trieblich von dem Drehbügel 21 entkoppelt (bzw. wieder antriebswirksam an den Drehbügel 21 gekoppelt). Die antriebswirksame Kopplung der Antriebseinrichtung 23 mit der Riegelplatte 61 bleibt dagegen unverändert erhalten.

Infolge dieses Entkoppelns (bzw. neuerlichen Koppelns) teilt der in den Fig. 2A und 2B gezeigte Zustand den Gesamtverlauf einer von der Antriebseinrichtung 23 bewirkten Verstellung des Rahmenschlosses 11 in den genannten ersten Stellbereich (zwischen dem in den Fig. 1A und 1B gezeigten Zustand und dem in den Fig. 2A und 2B gezeigten Zustand) und einen zweiten Stellbereich (zwischen dem in den Fig. 2A und 2B gezeigten Zustand und dem in den Fig. 3A und 3B gezeigten Zustand). Die Drehantriebsbewegung der Antriebseinrichtung 23 um die Drehachse D kann dabei über beide Stellbereiche und insbesondere auch beim Übergang aus dem einen in den anderen Stellbereich kontinuierlich fortlaufend erfolgen. Dabei dreht sich der Mitnehmer 23 zusammen mit dem Fortsatz 25 und dem Zapfen 67 an der Mitnehmerscheibe 69 im Verlauf des ersten Stellbereichs um etwa 180° und im Verlauf des zweiten Stellbereichs um weitere 90°.

Je nach Richtung der Antriebsbewegung findet beim Übergang zwischen den genannten Stellbereichen ein triebliches Entkoppeln oder ein antriebswirksames Koppeln der Antriebseinrichtung 23 mit dem Drehbügel 21 statt, das jeweils darauf beruht, dass der Koppelhebel 27 von der Antriebseinrichtung 23 entkoppelt bzw. an diese gekoppelt wird. Ausgehend von der in den Fig. 1A und 1B gezeigten Stellung entsprechen die ersten etwa 150° des ersten Stellbereichs dem Winkelbereich, in dem der Koppelhebel 27 von dem Mitnehmer 23 zu einer Schwenkbewegung um etwa 150° um die Drehachse D angetrieben wird. In den übrigen etwa 30° des ersten Stellbereichs führt die Verstellbewegung des Mitnehmers 23 zu dem genannten Entkoppeln bzw. Koppeln des Koppelhebels 27, ohne dass dessen Winkelausrichtung weiter verändert wird. Somit kann auch lediglich der genannte etwa 150° umfassende Winkelbereich als erster Stellbereich aufgefasst werden, während die genannten übrigen 30° einen Übergangsbereich zwischen dem ersten und dem zweiten Stellbereich darstellen.

Um das genannte Entkoppeln bzw. Koppeln zu ermöglichen, weist der Koppelhebel 27 neben der Schwenkbarkeit relativ zur Drehachse D auch einen ausrichtungsabhängigen translatorischen Freiheitsgrad auf. So kann der Koppelhebel 27 in der in Fig. 2A gezeigten Stellung im Wesentlichen linear und parallel zu seiner Längserstreckung versetzt werden. Durch dieses Versetzen tritt bei der gezeigten Ausführungsform der Fortsatz 25 der Antriebseinrichtung 23 aus der Aufnahme 39 des Koppelhebels 27 heraus, so dass der Fortsatz 25 anschließend in Richtung der in Fig. 3A gezeigten Stellung frei drehen kann, also insbesondere ohne den Koppelhebel 27 zu einer gemeinsamen Drehung anzutreiben. Bei umgekehrter Verstellrichtung führt das genannte Versetzen dazu, dass der Fortsatz 25 wieder in die Aufnahme 39 eingreift und so den Koppelhebel 27 wieder zu einer gemeinsamen Drehung mit der Antriebseinrichtung 23 koppelt.

Das Entkoppeln und das Koppeln von Antriebseinrichtung 23 und Drehbügel 21 beruhen also darauf, dass aufgrund des linearen Versetzens des Koppelhebels 27 der Fortsatz 25 aus der Aufnahme 39 heraustritt bzw. in die Aufnahme 39 eingreift. Dabei soll dieses Entkoppeln bzw. Koppeln lediglich in dem in den Fig. 2A und 2B gezeigten Übergangszustand zwischen dem ersten Stellbereich und dem zweiten Stellbereich erfolgen. Dies wird durch die Form der Achsbohrung 73 des Koppelhebels 27 im Zusammenwirken mit einer einen Führungsabschnitt 75 bildenden Wand des Gehäuses 13 erreicht.

Die Achsbohrung 73 ist derart ausgebildet, dass der Mitnehmer 23 darin radial beweglich sein kann und grundsätzlich ein lineares Versetzen des Koppelhebels 27 relativ zu dem Mitnehmer 23 in Richtung der jeweiligen Längserstreckung des Koppelhebels 27 möglich ist. Ein solches Versetzen wird jedoch etwa in der in Fig. 1A gezeigten Ausrichtung der Koppelhebels 27 durch den genannten Führungsabschnitt 75 verhindert, an dem der Koppelhebel 27 anliegt. Lediglich wenn der Koppelhebel 27 die in Fig. 2A gezeigte Ausrichtung einnimmt, sperrt der Führungsabschnitt 75 das Versetzen des Koppelhebels 27 nicht länger, und der Koppelhebel 27 kann entlang des Führungsabschnitts 75 versetzt werden.

Das tatsächliche Versetzen des Koppelhebels 27 zur Entkopplung der Antriebseinrichtung 23 von dem Drehbügel 21 erfolgt dabei angetrieben durch die Antriebseinrichtung 23 und im Zusammenwirken mit einem als Wand ausgebildeten Drehbegrenzungsabschnitt 77 des Gehäuses 13. Der Drehbegrenzungsabschnitt 77 bildet für die Schwenkbewegung des Koppelhebels 27 einen Drehanschlag, an dem der Koppelhebel nach Durchlaufen des ersten Stellbereichs anschlägt und daher nicht weiter verschwenkt werden kann. Infolgedessen führt die weitere Drehung des Mitnehmers 23 dann gleichzeitig zu dem Versetzen des Koppelhebels 27 und dem Austreten des Fortsatzes 25 aus der Aufnahme 39, so dass die antriebswirksame Kopplung zwischen der Antriebseinrichtung 23 und dem Drehbügel 21 gelöst wird. Insofern bilden der Drehbegrenzungsabschnitt 77 und der Führungsabschnitt 75 eine Umlenkeinrichtung für den Koppelhebel 27, durch den die Schwenkbewegung des Koppelhebels 27 zu dem Versetzen des Koppelhebels 27 umgelenkt wird.

Bei Umkehrung der Verstellbewegungsrichtung der Antriebseinrichtung 23 erfolgt das erneute antriebswirksame Koppeln der Antriebseinrichtung 23 mit dem Drehbügel 21 auf entsprechende Weise: Nach Durchlaufen des zweiten Stellbereichs und Erreichen der in Fig. 2A gezeigten Stellung greift der Fortsatz 25 wieder in die Aufnahme 39 ein, wodurch zugleich der Koppelhebel 27 entlang seiner Längserstreckung entlang des Führungsabschnitts 75 linear versetzt wird. Durch das Eingreifen des Fortsatzes 25 in die Aufnahme 39 sind die Antriebseinrichtung 23 und der Drehbügel 21 dann wieder gekoppelt, so dass eine weitere Drehung des Mitnehmers 23 zu einem den Drehbügel 21 in die Öffnungsstellung überführenden Verschwenken des Koppelhebels 27 weg von dem Drehbegrenzungsabschnitt 77 führt.

Die in den Fig. 2A und 3A gezeigte Geschlossenstellung des Drehbügels 21 ist auf besondere Weise gegen einen von dem Drehbügel 21 ausgehenden Manipulationsversuch zum unbefugten Öffnen des Rahmenschlosses 11 geschützt. Beim Durchlaufen des ersten Stellbereichs, durch das der Drehbügel 21 zwischen seiner Offenstellung und seiner Geschlossenstellung verstellt wird, werden der Koppelhebel 27 und der Verbindungshebel 35 aus der in Fig. 1A gezeigten Antriebsausrichtung in die in Fig. 2A gezeigte Blockierausrichtung verstellt. Dabei durchläuft die Anordnung aus Koppelhebel 27 und Verbindungshebel 35 kurz vor Erreichen der Blockierausrichtung einen Totpunkt.

In diesem Totpunkt befinden sich die Drehachse D, der Anlenkungspunkt 33 und der Anlenkungspunkt 37 auf einer Linie, deren Ausrichtung zudem der Richtung einer auf die Übertragungseinrichtung aus Koppelhebel 27 und Verbindungshebel 35 wirkenden Kraft entspricht, wenn versucht wird, den Drehbügel 21 aus seiner Geschlossenstellung in Richtung der Offenstellung zu drängen. Im Totpunkt sind also die wirksamen Längsachsen des Koppelhebels 27 (von der Drehachse D zum Anlenkungspunkt 33) und des Verbindungshebels 35 (vom Anlenkungspunkt 33 zum Anlenkungspunkt 37) in einem Winkel von 180° zueinander ausgerichtet, während sie in der Antriebsausrichtung einen geringeren Winkel und in der Blockierausrichtung einen größeren Winkel zueinander einnehmen.

Der genannte Totpunkt kann vorteilhafterweise durch eine von dem Drehbügel 21 auf den Anlenkungspunkt 37 wirkende Kraft nicht überwunden werden. Durch ein Drängen des Drehbügels 21 in Richtung der Offenstellung wird die Anordnung aus Koppelhebel 27 und Verbindungshebel 35 nämlich nicht in Richtung der Antriebsausrichtung getrieben, sondern gerade davon weg. Insofern ist die Blockierausrichtung selbsthemmend gegen ein von dem Drehbügel 21 ausgehendes Verstellen in die Antriebsausrichtung. Das Drängen führt zu einem Drehmoment auf den Koppelhebel 27 im Gegenuhrzeigersinn, durch das der Koppelhebel 27 in Richtung des Drehbegrenzungsabschnitts 77 getrieben wird. Da der Koppelhebel 27 in der Blockierausrichtung bereits an dem Drehbegrenzungsabschnitt 77 anliegt, kann er nicht weiter verschwenkt werden. Die vom Drehbügel 21 ausgehende Krafteinwirkung bleibt somit wirkungslos.

Allenfalls führt eine von dem Drehbügels 21 ausgehende Krafteinwirkung aufgrund des vorgesehenen Spiels am der Blockierausrichtung entsprechenden Ende der Nut 41 und der Längenvariabilität des Koppelhebels 27 dazu, dass sich der Koppelhebel 27 geringfügig verkürzt und der Verbindungshebel 35 um dasselbe Maß im Wesentlichen entlang seiner Längserstreckung auf den Koppelhebel 27 zu versetzt wird. Diese Ausweichmöglichkeit des Verbindungshebels 35 kann bei der gezeigten Ausführungsform wie folgt dazu dienen, die Blockierwirkung der Blockierausrichtung gerade bei einem Manipulationsversuch noch zu verstärken.

Denn das Gehäuse 13 des Rahmenschlosses 11 weist eine Anschlageinrichtung in Form eines Stifts 79 auf, der das stabil in dem Gehäuse 13 angeordnet ist und sich von der (nicht gezeigten) Vorderseite bis zu der Rückseite des Gehäuses 13 erstreckt. Zudem weist der Verbindungshebel 35 einen Anschlagabschnitt 81 auf, der als Einkerbung in dem Verbindungshebel 35 ausgebildet ist.

Beim Verstellen des Verbindungshebels 35 in die Blockierausrichtung dringt der Stift 79 in den genannten Anschlagabschnitt 81 ein. Wird der Verbindungshebel 35 durch die Antriebseinrichtung 23 angetrieben wieder in die Antriebsausrichtung verstellt, kann der Stift 79 ungehindert aus dem Anschlagabschnitt 81 wieder heraustreten. Der Anschlagabschnitt 81 ist allerding derart geformt, dass bei einem linearen Versetzen des Verbindungshebels 35 in Richtung seiner Längserstreckung der Stift 79 an dem Anschlagabschnitt 81 anschlägt und dadurch zum einen ein weiteres Versetzen des Verbindungshebels 35 blockiert und zum anderen ein Verschwenken des Verbindungshebels 35 in Richtung des Totpunkts oder darüber hinaus verhindert wird. Ein Manipulationsversuch an dem Drehbügel 21 führt somit nicht zu einem Öffnen des Rahmenschlosses 11, sondern im Gegenteil sogar zu einem verstärkten Sperren des Drehbügels 21 in seiner Geschlossenstellung.

Zur weiteren Sicherung des Drehbügels 21 in seiner Geschlossenstellung weist der Verbindungshebel 35 zudem ein zusätzliches Blockierelement in Form einer aus der Zeichnungsebene nach vorne vorstehenden Zunge 83 auf. Diese ist für den Fall vorgesehen, dass sich die Kopplung des Verbindungshebels 35 mit dem Drehbügel 21 an dem Anlenkungspunkt 37 aufgrund eines Manipulationsversuchs löst. In diesem Fall ist der Drehbügel 21 zwar nicht mehr mit der Antriebseinrichtung 23 antriebswirksam gekoppelt und kann daher nicht mehr angetrieben in die Offenstellung verstellt werden. Jedoch ist der Drehbügel 21 weiterhin in der Geschlossenstellung blockiert, solange der Koppelhebel 27 und der Verbindungshebel 35 die Blockierausrichtung einnehmen. Denn die Zunge 83 verhindert als Anschlag ein Vorbeigleiten des Drehbügels 21 an dem Verbindungshebel 35.

In den Fig. 2A und 3A befindet sich ferner der Drehriegel 51 in seiner Verriegelungsstellung. Im Gegensatz zu der in Fig. 1A gezeigten Freigabestellung ist in dieser Verriegelungsstellung die Ausnehmung 57 des Drehriegels 51 nicht derart in dem Kanal der Klobenaufnahme 45 angeordnet, dass der Kloben 47 frei in die Klobenaufnahme 45 hinein oder aus der Klobenaufnahme 45 heraus bewegt werden kann. Vielmehr wird der (nicht dargestellte) Kanal der Klobenaufnahme 45 in der Verriegelungsstellung durch den Riegelblock 53 teilweise verengt und somit versperrt. Dabei greift der Riegelblock 53 des Drehriegels 51 in eine umlaufende Ringnut 85 des Klobens 47 ein, wenn sich der Kloben 47 in der Klobenaufnahme 45 befindet. Durch dieses Eingreifen des Drehriegels 51 in den Kloben 47 wird der Kloben 47 gegen ein Entnehmen aus der Klobenaufnahme 45 gesperrt.

Die Ausnehmung 57 ist allerdings derart geformt, dass ein Kloben 47 in die Klobenaufnahme 45 eingeführt werden kann, auch wenn sich der Drehriegel 51 in der Verriegelungsstellung befindet. Denn die Ausnehmung 57 ragt auch in der Verriegelungsstellung noch teilweise in den Kanal der Klobenaufnahme 45 hinein, wobei ein Randbereich der Ausnehmung 57 einen Drehanschlag 87 für einen in die Klobenaufnahme 45 einzuführenden Kloben 47 bildet. Bei Einführen des Klobens 47 in die Klobenaufnahme 45 drückt der Kloben 47 gegen den Drehanschlag 87 und kann den Drehriegel 51 dadurch gegen die den Drehriegel in die Verriegelungsstellung treibende Vorspannung kurzzeitig in die Freigabestellung verschwenken. Dadurch kann der Kloben 47 den Drehriegel 51 passieren, woraufhin der Drehriegel 51 aufgrund der Vorspannung wieder in die Verriegelungsstellung zurückschwenkt und den eingeführten Kloben 47 gegen ein Entnehmen sperrt. Diese durch die Vorspannung und die Ausbildung der Ausnehmung 57 bewirkte Rastfunktion der Klobenaufnahme 45 ermöglicht es vorteilhafterweise, den Kloben auch mit dem Riegelschloss 11 zu verbinden und daran zu sichern, wenn das Riegelschloss 11 bereits geschlossen ist, sich also der Drehriegel 21 in der Geschlossenstellung befindet.

Um den Kloben 47 auch dann in der Klobenaufnahme 45 lösbar zu halten, wenn der Drehbügel 21 sich in der Offenstellung befindet und der Drehriegel 51 die Freigabestellung einnimmt, kann optional eine zusätzliche Rasteinrichtung 89 vorgesehen sein (lediglich in Fig. 1A gezeigt). Die Rasteinrichtung 89 kann beispielsweise eine federvorgespannte Kugel oder dergleichen umfassen, welche in die Ringnut 85 des Klobens 47 rückfedernd eingreift. Somit kann der Kloben 47 beispielsweise während der Fahrt mit dem Zweirad in der Klobenaufnahme 45 gehalten werden.

Der in den Fig. 2A und 2B gezeigte Zustand des Rahmenschlosses 11 und der in den Fig. 3A und 3B gezeigte Zustand zeigen die Endstellungen des genannten zweiten Stellbereichs, in dem die Antriebseinrichtung 23 weiterhin mit der Riegelplatte 61 antriebswirksam gekoppelt, von dem Drehbügel 21 jedoch trieblich entkoppelt ist. Daher unterscheiden sich die Fig. 2A und 3A lediglich in der Stellung der Antriebseinrichtung 23 mit dem Fortsatz 25. Die Übertragungseinrichtung aus Koppelhebel 27 und Verbindungshebel 35 und der Drehriegel 21 dagegen verbleiben unverändert in der Blockierausrichtung bzw. der Geschlossenstellung.

Wie Fig. 2B und 3B zeigen, wird aber der durch den ersten Stellbereich hindurch erfolgte Bewegungsablauf der Riegelplatte 61 im zweiten Stellbereich kontinuierlich fortgesetzt. Geführt durch den Zapfen 67 in dem Langloch 65 schwenkt die Riegelplatte 61 um die Schwenkachse S in die in Fig. 3B gezeigte weitere Verriegelungsstellung. Während durch die in Fig. 1B gezeigte Verriegelungsstellung der Riegelplatte 61 der Drehbügel 21 in seiner Offenstellung gesperrt wird, dient die in Fig. 3B gezeigte Verriegelungsstellung der Riegelplatte 61 dazu, den Drehbügel 21 in seiner Geschlossenstellung zu sperren. Hierfür hintergreift der Blockierfortsatz 63 der Riegelplatte 61 das mit dem Verbindungshebel 35 gekoppelte Ende des Drehbügels 21.

Somit hat der zweite Stellbereich die Funktion, die bereits nach Durchlaufen des ersten Stellbereichs erreichte Geschlossenstellung des Drehbügels 21 noch weiter mittels der Riegelplatte 61 zu sichern.

Während das Verstellen der Riegelplatte 61 und des Drehbügels 21 in dem ersten Stellbereich synchron erfolgt, ermöglicht der zweite Stellbereich ein dem eigentlichen Schließen des Drehbügels 21 nachgeordnetes Sichern des Drehbügels 21 durch das aufgrund des Entkoppelns unabhängige weitere Verschwenken der Riegelplatte 61. Auf diese Weise wird eine besonders hohe Sicherheit des Rahmenschlosses 11 bei zugleich komfortabler Betätigung mittels einer einzelnen Antriebseinrichtung 23 erreicht.

### Bezugszeichenliste

- 11: Rahmenschloss
- 13: Gehäuse
- 15: Aufnahmeraum
- 17, 17': Schenkel
- 19: Rad
- 21: Drehbügel
- 23: Mitnehmer der elektrischen Antriebseinrichtung
- 25: Fortsatz
- 27: Koppelhebel
- 29: Schieberführung
- 31: Schieber
- 33: Anlenkungspunkt
- 35: Verbindungshebel
- 37: Anlenkungspunkt
- 39: Aufnahme
- 41: Nut
- 43: Zapfen
- 45: Klobenaufnahme
- 47: Kloben
- 49: Öffnung
- 51: Drehriegel
- 53: Riegelblock
- 55: Hebelarm
- 57: Ausnehmung
- 59: Zapfen
- 61: Riegelplatte
- 63: Blockierfortsatz
- 65: Langloch
- 67: Zapfen
- 69: Mitnehmerscheibe
- 71: Blockierausnehmung
- 73: Achsbohrung
- 75: Führungsabschnitt
- 77: Drehbegrenzungsabschnitt
- 79: Stift
- 81: Anschlagabschnitt
- 83: Zunge
- 85: Ringnut
- 87: Drehanschlag
- 89: Rasteinrichtung
- D: Drehachse
- S: Schwenkachse

## Patentansprüche

1. Rahmenschloss (11) für ein Zweirad, mit einer elektrischen Antriebseinrichtung (23), einem drehbar gelagerten Drehbügel (21), der von der Antriebseinrichtung (23) zwischen einer Offenstellung und einer Geschlossenstellung verstellbar ist, und einem Riegelelement (61), das von der Antriebseinrichtung (23) zwischen einer Verriegelungsstellung und einer Freigabestellung verstellbar ist,
wobei in einem ersten Stellbereich der Antriebseinrichtung (23) die Antriebseinrichtung (23) mit dem Drehbügel (21) antriebswirksam gekoppelt ist, und wobei in einem zweiten Stellbereich der Antriebseinrichtung (23) die Antriebseinrichtung (23) von dem Drehbügel (21) trieblich entkoppelt und mit dem Riegelelement (61) antriebswirksam gekoppelt ist.

2. Rahmenschloss nach Anspruch 1,
wobei auch in dem ersten Stellbereich die Antriebseinrichtung (23) mit dem Riegelelement (61) antriebswirksam gekoppelt ist.

3. Rahmenschloss nach Anspruch 1 oder 2,
wobei in dem zweiten Stellbereich der Antriebseinrichtung (23) der Drehbügel (21) in die Geschlossenstellung verstellt ist.

4. Rahmenschloss nach einem der vorhergehenden Ansprüche,
wobei das Riegelelement (61) dazu angepasst ist, in der Verriegelungsstellung den Drehbügel (21) gegen ein Verstellen aus der Geschlossenstellung zu sperren;
und/oder
wobei das Riegelelement (61) dazu angepasst ist, in der Verriegelungsstellung den Drehbügel (21) gegen ein Verstellen aus der Offenstellung zu sperren.

5. Rahmenschloss nach einem der vorhergehenden Ansprüche,
wobei die Antriebseinrichtung (23) dazu angepasst ist, bei einem Übergang von dem ersten Stellbereich in den zweiten Stellbereich zwangsgeführt von dem Drehbügel (21) trieblich entkoppelt zu werden.

6. Rahmenschloss nach einem der vorhergehenden Ansprüche,
wobei der Drehbügel (21) über zumindest ein Koppelelement (27) mit der Antriebseinrichtung (23) koppelbar ist.

7. Rahmenschloss nach Anspruch 6,
wobei das Koppelelement (27) versetzbar ist zwischen einer ersten Stellung, die der Offenstellung des Drehbügels (21) entspricht und in der das Koppelelement (27) mit der Antriebseinrichtung (23) drehwirksam gekoppelt ist, einer zweiten Stellung, die der Geschlossenstellung des Drehbügels (21) entspricht und in der das Koppelelement (27) weiterhin mit der Antriebseinrichtung (23) drehwirksam gekoppelt ist, und einer dritten Stellung, die weiterhin der Geschlossenstellung des Drehbügels (21) entspricht und in der das Koppelelement (27) von der Antriebseinrichtung (23) drehentkoppelt ist.

8. Rahmenschloss nach Anspruch 7,
wobei das Rahmenschloss (11) eine Umlenkeinrichtung (73, 75, 77) aufweist, die dazu angepasst ist, das Koppelelement (27) bei einer von der ersten Stellung ausgehenden Drehbewegung gegen eine Drehbewegung über die zweite Stellung hinaus zu sperren und ein Versetzen des Koppelelements (27) in einer radialen Richtung zu bewirken.

9. Rahmenschloss nach einem der Ansprüche 6 bis 8,
wobei das Koppelelement (27) eine Aufnahme (39) aufweist, in die ein Ausgangselement der Antriebseinrichtung (23) eingreift, um den Drehbügel (21) zu verstellen, wobei die Antriebseinrichtung (23) und das Koppelelement (27) dazu angepasst sind, dass bei einem Übergang der Antriebseinrichtung (23) von dem ersten Stellbereich in den zweiten Stellbereich das Ausgangselement der Antriebseinrichtung (23) aus der Aufnahme (39) des Koppelelements (27) austritt, um den Drehbügel (21) von der Antriebseinrichtung (23) zu entkoppeln.

10. Rahmenschloss nach einem der Ansprüche 6 bis 9,
wobei das Koppelelement (27) einen schwenkbaren Koppelhebel (27) umfasst, der eine variable antriebswirksame Länge aufweist.

11. Rahmenschloss nach Anspruch 10,
wobei der Koppelhebel (27) zumindest zweiteilig mit einer Schieberführung (29) und einem in der Schieberführung (29) geführten Schieber (31) ausgebildet ist;
und/oder
wobei eine Zwangsführungseinrichtung (41, 43) vorgesehen ist, durch welche die antriebswirksame Länge des Koppelhebels (27) in Abhängigkeit von einer Winkelausrichtung des Koppelhebels (27) festgelegt ist.

12. Rahmenschloss nach einem der vorhergehenden Ansprüche, wobei die Antriebseinrichtung (27) ein Exzenterelement (67) aufweist, das in einer Nut oder in einem Langloch (69) des Riegelelements (61) geführt ist, um die Antriebseinrichtung (23) mit dem Riegelelement (61) antriebswirksam zu koppeln;
und/oder
wobei das Riegelelement (61) an einem Gehäuseabschnitt des Rahmenschlosses (11) schwenkbar angelenkt ist.

13. Rahmenschloss nach einem der vorhergehenden Ansprüche, wobei die Antriebseinrichtung (23) durch eine Drehantriebseinrichtung gebildet ist, die dazu angepasst ist, für ein Verstellen des Drehbügels (21) zwischen der Offenstellung und der Geschlossenstellung eine Drehbewegung von höchstens 360° durchzuführen; und/oder
wobei die Antriebseinrichtung (23) einen einzigen elektrischen Motor aufweist;
und/oder
wobei der Drehbügel (21) von der Antriebseinrichtung über eine Übertragungseinrichtung (27, 35) zwischen der Offenstellung und der Geschlossenstellung verstellbar ist, wobei die Antriebseinrichtung einen Elektromotor umfasst, der ein zu einer Drehverstellbewegung antreibbares Ausgangselement (23) aufweist, und wobei die Übertragungseinrichtung dazu angepasst ist, eine Drehverstellbewegung des Ausgangselements (23), die höchstens eine Umdrehung beträgt, in eine vollständige Verstellbewegung des Drehbügels (21) zwischen der Offenstellung und der Geschlossenstellung zu übertragen;
und/oder
wobei die Antriebseinrichtung einen gekapselten Elektromotor umfasst, der ein zu einer Drehverstellbewegung antreibbares Ausgangselement (23) aufweist, ohne dass bezogen auf den Drehmomentübertragungspfad dem Ausgangselement (23) des Elektromotors ein Zahnradgetriebe nachgelagert ist.

14. Rahmenschloss nach einem der vorhergehenden Ansprüche,
wobei das Rahmenschloss (11) eine Klobenaufnahme (45) für einen Kloben (47) eines Sicherungsseils sowie einen Drehriegel (51) aufweist, der zwischen einer Verriegelungsstellung, in der ein in die Klobenaufnahme (45) eingeführter Kloben (47) gegen ein Entnehmen gesperrt ist, und einer Freigabestellung schwenkbar ist, in der ein in die Klobenaufnahme (45) eingeführter Kloben (47) für ein Entnehmen freigegeben ist,
wobei die Antriebseinrichtung (23) oder ein hiermit antriebswirksam gekoppeltes Element (27) dazu angepasst ist, den Drehriegel (51) zu einer Schwenkbewegung in die Freigabestellung anzutreiben, wenn der Drehbügel (21) aus der Geschlossenstellung in die Offenstellung verstellt wird.

15. Rahmenschloss nach Anspruch 14,
wobei der Drehriegel (51) in die Verriegelungsstellung vorgespannt ist;
und/oder
wobei in der Verriegelungsstellung des Drehriegels (51) ein Kloben (47) in die Klobenaufnahme (45) einrastend einführbar ist.

## Claims

1. A frame lock (11) for a two-wheeler, comprising an electrical drive device (23); a rotatably supported rotatable hoop (21) which is adjustable between an open position and a closed position by the drive device (23); and a latch element (61) which is adjustable between a latched position and a release position by the drive device (23),
wherein, in a first adjustment region of the drive device (23), the drive device (23) is coupled to the rotatable hoop (21) in a drive-operative manner; and wherein, in a second adjustment region of the drive device (23), the drive device (23) is decoupled drive-wise from the rotatable hoop (21) and is coupled to the latch element (61) in a drive-operative manner.

2. A frame lock in accordance with claim 1,
wherein, in the first adjustment region, the drive device (23) is also coupled to the latch element (61) in a drive-operative manner.

3. A frame lock in accordance with claim 1 or claim 2,
wherein, in the second adjustment region of the drive device (23), the rotatable hoop (21) is adjusted in the closed position.

4. A frame lock in accordance with any one of the preceding claims, wherein the latch element (61) is adapted to block the rotatable hoop (21) against an adjustment out of the closed position in the latched position;
and/or
wherein the latch element (61) is adapted to block the rotatable hoop (21) against an adjustment out of the open position in the latched position.

5. A frame lock in accordance with any one of the preceding claims,
wherein the drive device (23) is adapted to be decoupled drive-wise from the rotatable hoop (21) in a forcibly guided manner on a transition from the first adjustment region into the second adjustment region.

6. A frame lock in accordance with any one of the preceding claims,
wherein the rotatable hoop (21) is couplable to the drive device (23) via at least one coupling element (27).

7. A frame lock in accordance with claim 6,
wherein the coupling element (27) is displaceable between a first position, which corresponds to the open position of the rotatable hoop (21) and in which the coupling element (27) is coupled to the drive device (23) in a rotationally operative manner, a second position, which corresponds to the closed position of the rotatable hoop (21) and in which the coupling element (27) is still coupled to the drive device (23) in a rotationally operative manner, and a third position which still corresponds to the closed position of the rotatable hoop (21) and in which the coupling element (27) is rotationally decoupled from the drive device (23).

8. A frame lock in accordance with claim 7,
wherein the frame lock (11) has a deflection device (73, 75, 77) which is adapted to block the coupling element (27) against a rotary movement beyond the second position on a rotary movement starting from the first position and to effect a displacement of the coupling element (27) in a radial direction.

9. A frame lock in accordance with any one of the claims 6 to 8,
wherein the coupling element (27) has a reception (39) into which a starting element of the drive device (23) engages to adjust the rotatable hoop (21), with the drive device (23) and the coupling element (27) being adapted such that, on a transition of the drive device (23) from the first adjustment region into the second adjustment region, the starting element of the drive device (23) exits the reception (39) of the coupling element (27) to decouple the rotatable hoop (21) from the drive device (23).

10. A frame lock in accordance with any one of the claims 6 to 9,
wherein the coupling element (27) comprises a pivotable coupling lever (27) which has a variable drive-operative length.

11. A frame lock in accordance with claim 10,
wherein the coupling lever (27) is configured in at least two parts with a slider guide (29) and with a slider (31) guided in the slider guide (29);
and/or
wherein a compulsory guide device (41, 43) is provided by which the drive-operative length of the coupling lever (27) is fixed in dependence on an angular orientation of the coupling lever (27).

12. A frame lock in accordance with any one of the preceding claims,
wherein the drive device (27) has an eccentric element (67) which is guided in a groove or in an elongate hole (69) of the latch element (61) to couple the drive device (23) to the latch element (61) in a drive-operative manner;
and/or
wherein the latch element (61) is pivotably connected in an articulated manner to a housing section of the frame lock (11).

13. A frame lock in accordance with any one of the preceding claims,
wherein the drive device (23) is formed by a rotary drive device which is adapted to carry out a rotary movement of at most 360° for an adjustment of the rotatable hoop (21) between the open position and the closed position;
and/or
wherein the drive device (23) has a single electric motor; and/or
wherein the rotatable hoop (21) is adjustable by the drive device via a transmission device (27, 35) between the open position and the closed position, with the drive device comprising an electric motor which has a starting element (23) drivable to make a rotary adjustment movement, and with the transmission device being adapted to transmit a rotary adjustment movement of the starting element (23), which amounts at most to one revolution, into a complete adjustment movement of the rotatable hoop (21) between the open position and the closed position;
and/or
wherein the drive device comprises an encapsulated electric motor which has a starting element (23) drivable to make a rotary adjustment movement without a toothed wheel transmission being disposed downstream of the starting element (23) of the electric motor relative to the torque transmission path.

14. A frame lock in accordance with any one of the preceding claims,
wherein the frame lock (11) has a block receiver (45) for a block (47) of a securing cable as well as a rotational bolt (51) which is pivotable between a latched position, in which a block (47) introduced into the block receiver (45) is blocked against removal, and a release position, in which a block (47) introduced into the block receiver (45) is released for removal;
wherein the drive device (23) or an element (27) coupled hereto in a drive-operative manner is adapted to drive the rotational bolt (51) to make a pivot movement into the release position when the rotatable hoop (21) is adjusted from the closed position into the open position.

15. A frame lock in accordance with claim 14,
wherein the rotational bolt (51) is preloaded into the latched position;
and/or
wherein a block (47) can be introduced into the block receiver (45) in a latching manner in the latched position of the rotational bolt (51).

## Revendications

1. Cadenas de cadre (11) pour un deux-roues, comprenant un système d'entraînement électrique (23), un arceau rotatif (21) monté en rotation, qui est déplaçable par le système d'entraînement (23) entre une position ouverte et une position fermée, et un élément de verrouillage (61) qui est déplaçable par le système d'entraînement (23) entre une position de verrouillage et une position de libération,
dans lequel dans une première zone de positionnement du système d'entraînement (23) le système d'entraînement (23) est couplé avec l'arceau rotatif (21) de manière effective quant à l'entraînement, et dans lequel dans une seconde zone de positionnement du système d'entraînement (23), le système d'entraînement (23) est découplé mécaniquement vis-à-vis de l'arceau rotatif et est couplé avec l'élément de verrouillage (61) de manière effective quant à l'entraînement.

2. Cadenas de cadre selon la revendication 1,
dans lequel le système d'entraînement (23) est couplé, également dans la première zone de positionnement, avec l'élément de verrouillage (61) de manière effective quant à l'entraînement.

3. Cadenas de cadre selon la revendication 1 ou 2,
dans lequel, dans la seconde zone de positionnement du système d'entraînement (23), l'arceau rotatif (21) est déplacé vers la position fermée.

4. Cadenas de cadre selon l'une des revendications précédentes,
dans lequel l'élément de verrouillage (61) est adapté à verrouiller, dans la position de verrouillage, l'arceau rotatif (21) à l'encontre d'un déplacement hors de la position fermée ;
et/ou
dans lequel l'élément de verrouillage (61) est adapté à verrouiller, dans la position de verrouillage, l'arceau rotatif (21) à l'encontre d'un déplacement hors de la position ouverte.

5. Cadenas de cadre selon l'une des revendications précédentes,
dans lequel le système d'entraînement (23) est adapté, lors d'une transition depuis la première zone de positionnement vers la seconde zone de positionnement, à être découplé mécaniquement vis-à-vis de l'arceau rotatif (21) de manière guidée à force.

6. Cadenas de cadre selon l'une des revendications précédentes,
dans lequel l'arceau rotatif (21) est susceptible d'être couplé avec le système d'entraînement (23) via au moins un élément de couplage (27).

7. Cadenas de cadre selon la revendication 6,
dans lequel l'élément de couplage (27) est déplaçable entre une première position qui correspond à la position ouverte de l'arceau rotatif (21) et dans laquelle l'élément de couplage (27) est couplé avec le système d'entraînement (23) de manière effective vis-à-vis d'une rotation, une seconde position qui correspond à la position fermée de l'arceau rotatif (21) et dans laquelle l'élément de couplage (27) continue à être couplé avec le système d'entraînement (23) de manière effective vis-à-vis d'une rotation, et une troisième position, qui continue à correspondre à la position fermée de l'arceau rotatif (21) et dans laquelle l'élément de couplage (27) est découplé du système d'entraînement (23) vis-à-vis d'une rotation.

8. Cadenas de cadre selon la revendication 7,
dans lequel le cadenas de cadre (11) comprend un système de renvoi (73, 75, 77) qui est adapté à bloquer l'élément de couplage (27), lors d'un mouvement de rotation partant de la première position, à l'encontre d'un mouvement de rotation au-delà de la seconde position, et à provoquer un déplacement de l'élément de couplage (27) dans une direction radiale.

9. Cadenas de cadre selon l'une des revendications 6 à 8,
dans lequel l'élément de couplage (27) comporte un récepteur (39) dans laquelle s'engage un élément de sortie du système d'entraînement (23), afin de déplacer l'arceau rotatif (21), dans lequel le système d'entraînement (23) et l'élément de couplage (27) sont adaptés de sorte que lors d'une transition du système d'entraînement (23) depuis la première zone de positionnement jusque dans la seconde zone de positionnement, l'élément de sortie du système d'entraînement (23) sort du récepteur (39) de l'élément de couplage (27), pour découpler l'arceau rotatif (21) vis-à-vis du système d'entraînement (23).

10. Cadenas de cadre selon l'une des revendications 6 à 9,
dans lequel l'élément de couplage (27) inclut un levier de couplage pivotant (27), qui présente une longueur efficace en termes d'entraînement variable.

11. Cadenas de cadre selon la revendication 10,
dans lequel le levier de couplage (27) est réalisé au moins en deux parties avec un guidage à glissière (29) et un coulisseau (31) guidé dans le guidage à glissière (29) ;
et/ou
dans lequel il est prévu un moyen de guidage forcé (41, 43) au moyen duquel la longueur efficace en termes d'entraînement du levier de couplage (27) est fixée en fonction d'une orientation angulaire du levier de couplage (27).

12. Cadenas de cadre selon l'une des revendications précédentes,
dans lequel le système d'entraînement (27) comprend un élément excentrique (67) qui est guidé dans une gorge ou dans un trou oblong (69) de l'élément de verrouillage (61) afin de coupler le système d'entraînement (23) avec l'élément de verrouillage (61) de manière effective quant à l'entraînement ;
et/ou dans lequel l'élément de verrouillage (61) est articulé de manière pivotante sur une portion du boîtier du cadenas de cadre (11).

13. Cadenas de cadre selon l'une des revendications précédentes,
dans lequel le système d'entraînement (23) est formé par un système d'entraînement rotatif, qui est adapté, pour un déplacement de l'arceau rotatif (21) entre la position ouverte et la position fermée, à exécuter un mouvement de rotation au maximum de 360° ;
et/ou
dans lequel le système d'entraînement (23) comprend un unique moteur électrique ;
et/ou
dans lequel l'arceau rotatif (21) est déplaçable par le système d'entraînement via un moyen de transmission (27, 35) entre la position ouverte et la position fermée, dans lequel le système d'entraînement comprend un moteur électrique qui comprend un élément de sortie (23) susceptible d'être entraîné en un mouvement de déplacement rotatif, et dans lequel le moyen de transmission est adapté à transmettre un mouvement de déplacement rotatif de l'élément de sortie (23), qui s'élève au maximum à une révolution, en un mouvement de déplacement complet de l'arceau rotatif (21) entre la position ouverte et la position fermée ;
et/ou
dans lequel le système d'entraînement inclut un moteur encapsulé, qui comprend un élément de sortie (23) susceptible d'être entraîné en un mouvement de déplacement rotatif sans prévoir un mécanisme à engrenages placé à la suite de l'élément de sortie (23) du moteur électrique en se référant au trajet de transmission du couple de rotation.

14. Cadenas de cadre selon l'une des revendications précédentes,
dans lequel le cadenas de cadre (11) comprend un récepteur de bloc (45) pour un bloc (47) d'un câble de sécurité, ainsi qu'un verrou rotatif (51), qui est capable de pivoter entre une position de verrouillage dans laquelle un bloc (47) introduit dans le récepteur de bloc (45) est bloqué à l'encontre d'un enlèvement, et une position de libération dans laquelle un bloc (47) introduit dans le récepteur de bloc (45) est libéré pour un enlèvement,
dans lequel le système d'entraînement (23) ou bien un élément (27) couplé à celui-ci de manière effective quant à l'entraînement, est adapté à entraîner le verrou rotatif (51) en un mouvement de pivotement jusque dans la position de libération quand l'arceau rotatif (27) est déplacé hors de la position fermée jusque dans la position ouverte.

15. Cadenas de cadre selon la revendication 14,
dans lequel le verrou rotatif (51) est précontraint vers la position de verrouillage ;
et/ou
dans lequel, dans la position de verrouillage du verrou rotatif (51), un bloc (47) est susceptible d'être introduit de manière à s'enclencher dans le récepteur de bloc (45).
